(19) Europäisches Patentamt
European Patent Office
Office européen des brevets

(11) **EP 1 471 591 A1**

(12) **EUROPEAN PATENT APPLICATION**
published in accordance with Art. 158(3) EPC

(43) Date of publication:
**27.10.2004 Bulletin 2004/44**

(21) Application number: **02768089.1**

(22) Date of filing: **26.09.2002**

(51) Int Cl.[7]: **H01M 10/40**, H01M 2/16, H01M 10/44

(86) International application number:
**PCT/JP2002/009972**

(87) International publication number:
**WO 2003/030292 (10.04.2003 Gazette 2003/15)**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **27.09.2001 JP 2001295869**
**12.03.2002 JP 2002067300**
**22.03.2002 JP 2002080986**
**30.05.2002 JP 2002157191**
**30.05.2002 JP 2002157259**

(71) Applicant: **Nisshinbo Industries, Inc.**
**Chuo-ku, Tokyo 103-8650 (JP)**

(72) Inventors:
- **SATO, Takaya,**
**c/o NISSHINBO INDUSTRIES, INC.**
**Chiba-shi, Chiba 267-0056 (JP)**
- **BANNO, Kimiyo,**
**c/o NISSHINBO INDUSTRIES, INC.**
**Chiba-shi, Chiba 267-0056 (JP)**
- **MARUO, Tatsuya,**
**c/o NISSHINBO INDUSTRIES, INC.**
**Chiba-shi, Chiba 267-0056 (JP)**
- **NOZU, Ryutaro,**
**c/o NISSHINBO INDUSTRIES, INC.**
**Chiba-shi, Chiba 267-0056 (JP)**
- **TAKAGI, Kentaro,**
**c/o NISSHINBO INDUSTRIES, INC.**
**Chiba-shi, Chiba 267-0056 (JP)**

(74) Representative: **Stuart, Ian Alexander et al**
**Mewburn Ellis LLP**
**York House**
**23 Kingsway**
**London WC2B 6HP (GB)**

(54) **NONAQUEOUS ELECTROLYTE SECONDARY CELL, POWER SUPPLY COMPRISING THE SECONDARY CELL, PORTABLE DEVICE, TRANSPORTABLE OR MOVABLE MACHINE, ELECTRIC APPARATUS FOR HOME USE, AND METHOD FOR CHARGING NONAQUEOUS ELECTROLYTE SECONDARY CELL**

(57) A nonaqueous electrolyte secondary battery is made up of a positive electrode and a negative electrode which are composed of a lithium ion-occluding and releasing material and a binder polymer, at least one separator for separating the positive and negative electrodes, and a nonaqueous electrolyte which is composed of a lithium salt and an organic solvent. The electrolyte includes also a substance which is oxidized at the positive electrode at a cell voltage of from 4.1 V to 5.2 V, and which provokes an oxidation reaction that differs from the lithium-releasing reaction. The presence of this substance improves the overcharge characteristics and safety of the nonaqueous electrolyte secondary battery.

**FIG.2**

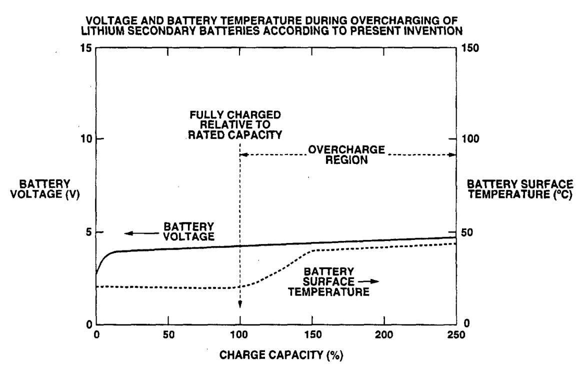


EP 1 471 591 A1

## Description

TECHNICAL FIELD

The present invention relates to nonaqueous electrolyte secondary batteries, to power supplies, portable devices, mobile or transportation devices and household electrical appliances which use such secondary batteries, and to a method of charging nonaqueous electrolyte secondary batteries.

BACKGROUND ART

Demand has grown in recent years for high-capacity secondary batteries as power supplies for portable devices such as video cameras and notebook computers, and as power supplies for electric cars, hybrid cars, electric power storage and other applications.
Secondary batteries currently in common use include nickel-cadmium cells and nickel hydrogen cells which employ aqueous electrolytes. Owing to the electrolysis of water, such aqueous systems have a cell voltage of only about 1.2 V, making it difficult to achieve a higher energy density.
Attention has thus been devoted recently to lithium-based secondary cells, which have a high cell voltage of at least 3 V and a large energy density per unit weight.
Lithium-based secondary cells generally use a liquid electrolyte in the form of an electrolyte solution prepared by dissolving an ion-conductive salt such as $LiBF_4$ or $LiPF_6$ in an aprotic organic solvent, and are thus classified as nonaqueous electrolyte batteries.
The above lithium-based secondary cells fall into two classes: lithium metal secondary cells in which lithium metal or a lithium alloy is used as the negative electrode, and lithium ion secondary cells in which a carbonaceous material or a transition metal capable of being doped with lithium ions is used as the electrode active material.
Lithium metal secondary cells usually use highly active lithium or lithium alloy as the negative electrode active material, and thus require special care to ensure safety.
Lithium ion secondary cells use a carbonaceous material capable of occluding and releasing lithium ions as the negative electrode active material, a lithium-containing metal oxide such as $LiCoO_2$, $LiNiO_2$, $LiMn_2O_4$ or $LiFeO_2$ as the positive electrode active material, and a lithium salt dissolved in an organic solvent as the electrolyte solution. Once these components have been assembled into a cell, the lithium ions which leave the positive electrode active material when the cell is initially charged enter the carbon particles, making the cell chargeable and dischargeable. Because lithium ion secondary cells do not use metallic lithium as a starting material, they are generally regarded as safe.
In practice, however, when the cell is overcharged above its rated capacity, as the level of overcharge rises, excessive lithium ion extraction from the positive electrode occurs and is accompanied by the excessive insertion of lithium ions and the deposition of lithium metal at the negative electrode.
As a result, very unstable high oxides form at the positive electrode side which has lost lithium ions. Moreover, as overcharging proceeds, the voltage continues to climb, subjecting organic substances and other constituents within the electrolyte solution to decomposition reactions which in turn generate large amounts of combustible gas. Rapidly exothermic reactions also arise, causing abnormal heating of the cell, which can ultimately lead to ignition and make it impossible to fully ensure the safety of the cell. Such circumstances become increasingly significant the higher the energy density of the lithium ion secondary cell.
Solutions that have been devised to prevent such runaway reactions in batteries include a battery provided with the ability to short across the positive and negative electrodes when the cell temperature rises above 60°C (JP-A 10-255757), and a process in which a fluorinated organic compound that is not self-flammable is added to the electrolyte (JP-A 9-2559925). Unfortunately, these solutions are not always adequate. The approach generally taken at present is to use a protective circuit of the type described subsequently to prevent overcharging.
In nickel-cadmium storage batteries, skillful use is made of a gas absorbing mechanism which reacts oxygen generated at the positive electrode side during overcharging with hydrogen at the negative electrode side to revert the oxygen back to water. This prevents an overcharged state from arising and also keeps the battery from undergoing a rise in internal pressure, a rise in voltage and a rise in the concentration of the electrolyte solution.
Yet, in lithium secondary cells which employ organic solvents, such a gas absorbing mechanism is believed to be nearly impossible to use in principle. It is thus felt that lithium secondary cells of this type require the incorporation of a protective circuit which prevents overcharging.
However, a protective circuit for preventing overcharging requires complex control technology, raising the total cost of the battery. Moreover, in lithium ion secondary batteries in actual use, the protective circuit is situated within the battery pack. The mass and the volume occupied by the protective circuit thus lower the actual energy density, particularly the volumetric energy density ($Wh/m^3$), of the battery.

It has recently been reported that lithium ion secondary cells which are provided with a polyvinylidene fluoride resin between the positive and negative electrodes, when subjected to overcharging, do not experience a rise in the cell voltage and do not undergo a runaway reaction (JP-A 9-2559925).

The same publication mentions that the undesirable effects of overcharging, including a rise in voltage, can be prevented by interposing a polyvinylidene fluoride resin between the positive and negative electrodes, such as by filling a separator situated between the positive and negative electrodes with polyvinylidene fluoride resin or by forming a polyvinylidene fluoride resin film between the positive and negative electrodes.

However, polyvinylidene fluoride resin has a poor ionic conductivity in and of itself, and so placing such a resin between the positive and negative electrodes may raise the internal resistance of the cell and lower the battery performance (e.g., rate capability).

In addition, polyvinylidene fluoride resins are known to have a large heat deformability. In particular, polyvinylidene fluoride copolymers composed of a polyvinylidene fluoride component in combination with trifluorochloroethylene, tetrafluoroethylene, hexafluoropropylene or ethylene are known to be even more subject to heat deformation. If the battery reaches an elevated temperature of more than 60°C, the polyvinylidene fluoride resin is likely to undergo changes such as deformation and melting, adversely impacting battery performance. Moreover, there is no guarantee that the overcharge preventing function mentioned above will operate at elevated temperatures above 60°C.

The proliferation in recent years of cell phones, notebook computers and other portable electronic devices has engendered a growing demand for larger capacities and higher energy densities in the rechargeable batteries used as the power supplies for such equipment.

Nonaqueous electrolyte secondary batteries such as high-voltage, high-energy density lithium secondary cells hold much promise as rechargeable batteries for such applications. Lithium ion secondary cells in which a complex oxide of lithium and a transition metal serves as the positive electrode and a carbonaceous material capable of intercalating and deintercalating lithium serves as the negative electrode have recently been commercialized.

Most such lithium ion secondary cells are designed to charge and discharge in a range bounded by a fully charged cell voltage of about 4.2 V and a discharge end voltage of about 2.7 V. In these high-voltage secondary cells having a voltage of more than 4 V, the organic substances and electrode active materials used at the interior of the cell are exposed to high voltages and sometimes undergo electrolysis.

These secondary cells are also electrochemical devices which store and discharge electricity by means of chemical reactions that utilize electrical energy. When the electrical energy during charging is used other than in the charging and discharging reactions, a loss in the charge/discharge energy arises, lowering the charge/discharge efficiency. Hence, a charge method having a high charge/discharge efficiency is desired.

Moreover, when a cell is held at a potential close to the fully charged state, passivating layers having poor ion conductivity and electron conductivity often form at positive and negative electrode surfaces and at positive and negative electrode active material surfaces. This lowers the energy efficiency, inhibits the ion insertion and elimination reactions, increases the internal resistance of the cell, and leads to declines in the energy density and output characteristics of the cell itself.

Such deterioration in the battery performance characteristics is observed as a decline in energy density when the charged battery is held at a high temperature or a decline in capacity with repeated charge/discharge cycling.

One possible cause of passivating layer formation is decomposition of the electrolyte. Such decomposition is further promoted at high temperatures.

That is, the organic solvent used in the electrolyte may undergo electrochemical decomposition or give rise to polymerization, leading to the formation of passivating layers on the surfaces of the electrode active materials and electrodes. Particularly in cases where a fluorine-bearing lithium salt is used as the ion-conductive salt, hydrogen fluoride sometimes forms in the presence of water and may decompose organic substances to create passivating layers.

In solvents containing a cyclic ester, the products of decomposition readily polymerize. The resulting polymer covers the surface of the electrode active materials, obstructing the small chamber between the electrodes and lowering the battery performance.

When manganese-rich and cobalt-rich lithium-containing metal oxides are used as the positive electrode material, the dissolution of manganese and cobalt reportedly occurs within the cell. The metal oxides which arise from the oxidation of these metal ions and lithium ions that leach into the electrolyte on account of such dissolution have a very low electron conductivity and thus hinder the cell reactions. In addition, these metal oxides are believed to catalyze the polymerization and/or decomposition of the electrolyte, and so there is a strong possibility that they further promote the formation of passivating layers.

Such passivating layers readily form at a high cell voltage. Above the rated voltage of an ordinary lithium secondary cell (4.2 V), the electrolyte undergoes decomposition, resulting in passivating layer formation and gas evolution.

Moreover, when charging is continued above 4.2 V, excessive lithium ion extraction occurs at the positive

electrode. This is accompanied by excessive lithium ion insertion at the negative electrode, resulting in the deposition of lithium metal. Also, a very unstable high oxide forms at the positive electrode side which has lost lithium ions. In addition, the voltage continues to rise with overcharging, subjecting organic substances and other constituents within the liquid electrolyte to decomposition reactions which generate a large amount of flammable gases. Rapidly exothermic reactions also arise, which causes abnormal heating of the battery and can ultimately lead to ignition.

These problems become increasingly critical as the energy density of the lithium ion secondary cell increases.

To avoid such problems, it has been strongly recommended that these nonaqueous secondary cells be charged in such a way that the voltage during charging does not exceed the rated voltage under any circumstances. This charging method is known as constant-current/constant-voltage (CCCV) charging.

CCCV charging is used to charge nonaqueous batteries which have a poor safety at cell voltages above some fixed voltage. Constant-current charging is carried out up to a predetermined voltage. Once the predetermined voltage has been reached, the method switches to constant-voltage charging, which is carried out at a voltage equal to the cell voltage when fully charged.

Yet, even when this charging method is used, the passivating layers described above form to some extent, as a result of which the charging operation is not sufficiently energy efficient. Moreover, a gradual deterioration in battery performance is almost impossible to avoid.

The present invention was arrived at in light of these circumstances. One object of the invention is both to provide nonaqueous electrolyte secondary batteries which, even when overcharged to a charge capacity of more than 100% the battery capacity, maintain the cell voltage within a given range and can thus enhance battery safety without the use of a protective circuit; and also to provide power supplies, portable devices, transportation or mobile devices, and household electrical appliances which use such secondary batteries.

A second object of the invention is to provide a method of charging nonaqueous electrolyte secondary batteries which is capable of efficiently charging such batteries at a high rate and a low loss, is capable of high-speed charging, and can improve cycle life and safety during overcharging.

To achieve the foregoing first object, we have conducted extensive investigations based on the following knowledge.

That is, as noted above, in nonaqueous electrolyte secondary batteries such as lithium ion secondary cells, when overcharging is carried out above the rated capacity of the cell, the overcharged state is accompanied by the extraction of surplus lithium ions from the positive electrode. At the negative electrode, the excess insertion of lithium ions occurs, resulting in the deposition of lithium metal. At the positive electrode which has lost lithium ions, a very unstable high oxide forms.

With overcharging, the voltage continues to climb and organic substances present within the battery (e.g., in the liquid electrolyte) undergo decomposition reactions, generating a large amount of flammable gases. Moreover, rapidly exothermic reactions arise, causing abnormal heating of the battery, which can ultimately result in battery ignition.

Specifically, as shown in FIG. 1, when charging is carried out to a level of about 170%, the battery voltage and battery temperature rise sharply, ultimately leading to battery rupture or ignition. For example, in a lithium ion battery in which the positive electrode active material is $LiCoO_2$, charging causes the following reaction in which $Li^+$ is abstracted from the $LiCoO_2$ to proceed at the positive electrode.

$$LiCoO_2 \rightarrow 0.5Li^+ + Li_{0.5}CoO_2 + 0.5e^-$$

The electrical capacity when all the $LiCoO_2$ has been converted to $Li_{0.5}CoO_2$ by the removal of lithium is the theoretical capacity 137 mAh/g. The battery is designed with this point serving as a 100% charge capacity (representing a fully charged state). If charging is continued further, allowing the reaction in which lithium is abstracted from $LiCoO_2$ to proceed further, the oxide becomes $Li_{<0.5}CoO_2$ and eventually approaches $Li_0CoO_2$. However, because $Li_{<0.3}CoO_2$ is very highly oxidizing and thermally unstable, it may self-heat and trigger cell runaway. Moreover, the $Li_{<0.3}CoO_2$ that forms has a very low reversibility and cannot be regenerated to $LiCoO_2$.

We have thus conducted extensive investigations on ways to suppress $Li_{<0.3}CoO_2$ formation by taking the electrical energy furnished to the reaction for removing additional lithium from $Li_{0.5}CoO_2$ and utilizing it instead in another reaction so as to prevent a runaway condition from arising in nonaqueous electrolyte secondary batteries. As a result of these investigations, we have found that when a given substance is added to the electrolyte, the electrical energy during overcharging is consumed in electrode oxidation of the substance, and moreover that a cyclic reaction mechanism in which the substance formed by such oxidation is reduced at the negative electrode functions efficiently, making it possible to suppress the formation of $Li_{<0.3}CoO_2$. We have also discovered that because nonaqueous electrolyte secondary batteries composed of a positive electrode, a negative electrode, a separator made primarily of cellulose and a polymer gel electrolyte have excellent charge/discharge properties, rate capability, safety, battery productivity and overcharging properties, even when such batteries are overcharged to a charge capacity that is 250% the cell capacity, the cell voltage does not climb above a predetermined voltage and the battery surface does not exhibit an excessive rise in temperature.

We have also conducted extensive investigations to achieve the second object of the invention mentioned above. As a result, we have discovered that by carrying out a specific direct-current pattern charging method in which consecutive charging patterns have different current values, and in particular by setting the current value for at least one pattern in this case to 1C or more, the electrical energy is efficiently used in the chemical reaction. This improves the energy utilization factor and the charging efficiency during charging, and in turn makes it possible to shorten the time required to fully charge the battery. In addition, we have found that such charging breaks up passivating layers which have formed on the electrodes and electrode active materials, and improves the charge-discharge cycle life. We have learned also that this charging method is highly suitable for secondary cells having the above-mentioned overcharge characteristics.

Accordingly, the present invention provides the following.

(1) A nonaqueous electrolyte secondary battery having a positive electrode and a negative electrode which are composed of a lithium ion-occluding and releasing material and a binder polymer, at least one separator for separating the positive and negative electrodes, and a nonaqueous electrolyte which is composed of a lithium salt and an organic solvent; the battery being characterized in that the electrolyte includes also a substance that undergoes oxidation at the positive electrode in a cell voltage range of 4.1 V to 5.2 V, which substance provokes at the positive electrode an oxidation reaction that differs from the lithium-releasing reaction.

(2) A nonaqueous electrolyte secondary battery having a positive electrode and a negative electrode which are composed of a lithium ion-occluding and releasing material and a binder polymer, at least one separator for separating the positive and negative electrodes, and a nonaqueous electrolyte which is composed of a lithium salt and an organic solvent; the battery being characterized in that the electrolyte includes also a substance that undergoes electrode oxidation at the positive electrode in a cell voltage range of 4.1 V to 5.2 V, which substance provokes at the positive electrode an oxidation reaction that differs from the lithium-releasing reaction and enables a reduction reaction that differs from the lithium-occluding reaction to occur at the negative electrode.

(3) The nonaqueous electrolyte secondary battery of (1) or (2) above which is characterized in that said electrode oxidation generates oxygen and/or carbon dioxide, and the oxygen and/or carbon dioxide oxidize a small amount of lithium metal which forms at the negative electrode to $Li_2O$ and/or $Li_2CO_3$.

(4) The nonaqueous electrolyte secondary battery of (3) above which is characterized in that the $Li_2O$ and/or $Li_2CO_3$ are reduced to metallic lithium and/or lithium ions at the negative electrode.

(5) The nonaqueous electrolyte secondary battery of any one of (1) to (4) above which is characterized by, when charging is carried out at 25°C and a current of up to 10.00C based on the theoretical capacity of the positive electrode, being free of positive electrode and negative electrode deterioration up to a charge capacity L defined as follows:

$$\text{charge capacity L (\%)} = 5 \times (\text{charging current C})^{-0.5} \times 100.$$

(6) The nonaqueous electrolyte secondary battery of any one of (1) to (5) above which is characterized in that electrode oxidation occurs in a voltage range of 1.40 to 1.60 V with respect to an $AlO_x$ reference electrode.

(7) The nonaqueous electrolyte secondary battery according to any one of (1) to (6) above which is characterized in that the organic solvent is one or more selected from among ethylene carbonate, propylene carbonate, vinylene carbonate and diethyl carbonate; wherein electrode oxidation occurs in a voltage range of 1.05 to 1.61 V, with respect to a standard hydrogen electrode (SHE), in the organic solvent and under normal temperature and standard atmospheric pressure conditions of 298.15 K and 101.325 Pa.

(8) The nonaqueous electrolyte secondary battery of any one of (1) to (7) above which is characterized in that the substance which is oxidized at the positive electrode is one or more selected from among compounds of the general formulas

R-CO-R, R-CO-OR, R-CO-NR'R, RO-CO-X-CO-OR and RR'N-CO-NR'R;

wherein each R is independently a substituted or unsubstituted monovalent hydrocarbon group, each R' is independently a hydrogen atom or a substituted or unsubstituted monovalent hydrocarbon group, and X is a divalent organic group.

(9) The nonaqueous electrolyte secondary battery of any one of (1) to (8) above which is characterized in that the

nonaqueous electrolyte is a polymer gel electrolyte.

(10) The nonaqueous electrolyte secondary battery of (9) above which is characterized in that the polymer gel electrolyte is obtained by gelating an electrolyte composition composed primarily of a compound having a reactive double bond on the molecule, an organic solvent and a lithium salt.

(11) The nonaqueous electrolyte secondary battery of (1) to (10) above which is characterized in that the separator has a porosity of at least 40%.

(12) The nonaqueous electrolyte secondary battery of (11) above which is characterized in that the separator is composed of at least one material selected from among cellulose, polypropylene, polyethylene and polyester, and has a porosity of at least 60%.

(13) The nonaqueous electrolyte secondary battery of any one of (1) to (12) above which is characterized in that the binder polymer in the positive electrode and/or negative electrode is composed of a thermoplastic polyurethane resin having a swelling ratio, as determined by the formula

$$\text{Swelling ratio (\%)} = \frac{\begin{array}{l}\text{Weight in grams of swollen thermoplastic resin after}\\ \text{24 hours immersion in electrolyte solution at 20°C (g)}\end{array}}{\begin{array}{l}\text{Weight in grams of thermoplastic resin before immersion}\\ \text{in electrolyte solution at 20°C (g)}\end{array}} \times 100,$$

in a range of 150 to 800%.

(14) A nonaqueous electrolyte secondary battery comprising a positive electrode, a negative electrode, a separator disposed between the positive and negative electrodes, and a polymer gel electrolyte; which battery is characterized in that the separator is a porous film or porous sheet composed primarily of cellulose.

(15) The nonaqueous electrolyte secondary battery of (14) above which is characterized in that the separator has a thickness of 20 to 50 μm and a porosity of 65 to 85%.

(16) The nonaqueous electrolyte secondary battery of (14) or (15) above which is characterized in that the polymer gel electrolyte is obtained by gelating an electrolyte composition composed primarily of a compound having a reactive double bond on the molecule, an organic solvent and an ion-conductive salt.

(17) The nonaqueous electrolyte secondary battery of any one of (1) to (16) above which is characterized by having the following characteristics (A) and/or (B):

(A) a cell voltage of less than 5.5 V when overcharged to a charge capacity which is 250% the cell capacity at 25°C,

(B) a battery surface temperature of less than 90°C when overcharged to a charge capacity which is 250% the cell capacity at 25°C.

(18) A power supply comprising a plurality of nonaqueous electrolyte secondary batteries according to any one of (1) to (17) above which is characterized in that the batteries are arranged in series and/or in parallel.

(19) A portable device characterized by being equipped with a nonaqueous electrolyte secondary battery according to any one of (1) to (17) above.

(20) A mobile or transportation device characterized by being equipped with a nonaqueous electrolyte secondary battery according to any one of (1) to (17) above.

(21) A household electrical appliance characterized by being equipped with a nonaqueous electrolyte secondary battery according to any one of (1) to (17) above.

(22) A method of charging a nonaqueous electrolyte secondary battery comprising a positive electrode and a negative electrode which are composed of a lithium-occluding and releasing material and a binder polymer, at least one separator for separating the positive and negative electrodes, and a lithium salt-containing nonaqueous electrolyte; the charging method being characterized in that, when charging is carried out by combining various charging patterns P, each specified by a current value X (in amperes, where $X \geq 0$ A) and a charging time t (in seconds, where $t \neq 0$ s), in the manner $P_1[X_1, t_1] \rightarrow P_2[X_2, t_2] \rightarrow P_3[X_3, t_3] \cdots \rightarrow P_n[X_n, t_n] \rightarrow P_{n+1}[X_{n+1}, t_{n+1}]$ (wherein n is an integer ≥ 1), the consecutive charging patterns P have mutually differing current values X.

(23) The nonaqueous electrolyte secondary battery charging method of (22) above which is characterized in that the current value $X_n$ for charging pattern $P_n[X_n, t_n]$ is at least 1C (1 hour rate) and the current value $X_{n+1}$ for charging pattern $P_{n+1}[X_{n+1}, t_{n+1}]$ (wherein n in each case is an integer ≥ 1) satisfies the condition $0 \leq X_{n+1} < X_n$.

(24) The nonaqueous electrolyte secondary battery charging method of (22) or (23) above which is characterized in that the current value $X_n$ for charging pattern $P_n[X_n, t_n]$ is at least 3C (0.33 hour rate) and the current value $X_{n+1}$

for charging pattern $P_{n+1}[X_{n+1}, t_{n+1}]$ (wherein n in each case is an integer ≥ 1) satisfies the condition $0 \leq X_{n+1} < X_n$.
(25) The nonaqueous electrolyte secondary battery charging method of any one of (22) to (24) above which is characterized in that the current value $X_n$ for charging pattern $P_n[X_n, t_n]$ is at least 3C (0.33 hour rate) and the current value $X_{n+1}$ for charging pattern $P_{n+1}[X_{n+1}, t_{n+1}]$ (wherein n in each case is an integer ≥ 1) is 0 A.
(26) The nonaqueous electrolyte secondary battery charging method of (22) or (23) above which is characterized in that the current value $X_n$ for charging pattern $P_n[X_n, t_n]$ is at least 1C (1 hour rate) and the nonaqueous electrolyte secondary battery when charged at said current value $X_n$ attains a voltage of at least 3.0 V, and in that the current value $X_{n+1}$ for charging pattern $P_{n+1}[X_{n+1}, t_{n+1}]$ (wherein n in each case is an integer ≥ 1) is 0 A.
(27) The nonaqueous electrolyte secondary battery charging method of (26) above which is characterized in that the nonaqueous electrolyte secondary battery attains a voltage of at least 4.2 V.
(28) The nonaqueous electrolyte secondary battery charging method of any one of (22) to (27) above which is characterized in that the charging time $t_n$ for charging pattern $P_n[X_n, t_n]$ (wherein n is an integer ≥ 1) is at most 1 second.
(29) A nonaqueous electrolyte secondary battery charging method which is characterized by carrying out the charging method of any one of (22) to (28) above in combination with dc constant-current charging and/or constant-voltage charging.
(30) A nonaqueous electrolyte secondary battery charging method which is characterized by carrying out the charging method of any one of (22) to (28) above, then carrying out dc constant-current charging and/or constant-voltage charging.
(31) A nonaqueous electrolyte secondary battery charging method which is characterized by using a charging method of any one of (22) to (30) above to carry out charging at preset charge cycle intervals during charge/discharge cycling of the nonaqueous electrolyte secondary battery.
(32) The nonaqueous electrolyte secondary battery charging method of any one of (22) to (31) above which is characterized by the use of a nonaqueous electrolyte secondary battery comprising a positive electrode and a negative electrode which are composed of a lithium ion-occluding and releasing material and a binder polymer, at least one separator for separating the positive and negative electrodes, and a nonaqueous electrolyte which is composed of a lithium salt and an organic solvent; wherein the electrolyte includes also a substance that undergoes oxidation at the positive electrode in a cell voltage range of 4.1 V to 5.2 V, which substance provokes at the positive electrode an oxidation reaction that differs from the lithium-releasing reaction.
(33) The nonaqueous electrolyte secondary battery charging method of any one of (22) to (31) above which is characterized by the use of a nonaqueous electrolyte secondary battery comprising a positive electrode and a negative electrode which are composed of a lithium ion-occluding and releasing material and a binder polymer, at least one separator for separating the positive and negative electrodes, and a nonaqueous electrolyte which includes a lithium salt and an organic solvent; wherein the electrolyte includes also a substance that undergoes electrode oxidation at the positive electrode in a cell voltage range of 4.1 V to 5.2 V, which substance provokes at the positive electrode an oxidation reaction that differs from the lithium-releasing reaction and enables a reduction reaction that differs from the lithium-occluding reaction to occur at the negative electrode.
(34) The nonaqueous electrolyte secondary battery charging method of (32) or (33) above which is characterized in that said electrode oxidation generates oxygen and/or carbon dioxide, and the oxygen and/or carbon dioxide oxidize a small amount of lithium metal which forms at the negative electrode to $Li_2O$ and/or $Li_2CO_3$.
(35) The nonaqueous electrolyte secondary battery charging method of (34) above which is characterized in that the $Li_2O$ and/or $Li_2CO_3$ are reduced to metallic lithium and/or lithium ions at the negative electrode.
(36) The nonaqueous electrolyte secondary battery charging method of any one of (32) to (35) above which is characterized by, when charging is carried out at 25°C and a current of up to 10.00C based on the theoretical capacity of the positive electrode, being free of positive electrode and negative electrode deterioration up to a charge capacity L defined as follows:

$$\text{charge capacity L (\%)} = 5 \times (\text{charging current C})^{-0.5} \times 100.$$

(37) The nonaqueous electrolyte secondary battery charging method of any one of (32) to (36) above which is characterized in that electrode oxidation occurs in a voltage range of 1.40 to 1.60 V with respect to an $AlO_x$ reference electrode.
(38) The nonaqueous electrolyte secondary battery charging method of any one of (32) to (37) above which is characterized in that the organic solvent is one or more selected from among ethylene carbonate, propylene carbonate, vinylene carbonate and diethyl carbonate; wherein electrode oxidation occurs in a voltage range of 1.05 to 1.61 V with respect to the standard hydrogen electrode (SHE) in the organic solvent and under normal temperature and standard atmospheric pressure conditions of 298.15 K and 101.325 Pa.

(39) The nonaqueous electrolyte secondary battery charging method of any one of (32) to (38) above which is characterized in that the substance which is oxidized at the positive electrode is one or more selected from among compounds of the general formulas

R-CO-R, R-CO-OR, R-CO-NR'R, RO-CO-X-CO-OR and RR'N-CO-NR'R;

wherein each R is independently a substituted or unsubstituted monovalent hydrocarbon group, each R' is independently a hydrogen atom or a substituted or unsubstituted monovalent hydrocarbon group, and X is a divalent organic group.

(40) The nonaqueous electrolyte secondary battery charging method of any one of (32) to (39) above which is characterized in that the separator has a porosity of at least 40%.

(41) The nonaqueous electrolyte secondary battery charging method of (40) above which is characterized in that the separator is composed of at least one selected from among cellulose, polypropylene, polyethylene and polyester, and has a porosity of at least 60%.

BRIEF DESCRIPTION OF THE DRAWINGS

FIG. 1 is a graph showing the voltage and battery temperature during overcharging in a lithium secondary cell according to the prior art.

FIG. 2 is a graph showing the voltage and battery temperature during overcharging in a first nonaqueous electrolyte secondary cell according to the present invention.

FIG. 3 is a graph showing the voltage and surface temperature during overcharging in the secondary cells produced in Examples 1 to 3 according to the invention and in Comparative Example 1.

FIG. 4 is a graph showing the change in voltage during continuous charging in the battery module and the individual cells produced in Example 4 according to the invention.

FIG. 5 is a graph showing the change in voltage during continuous charging in the battery module and the individual cells produced in Example 5 according to the invention.

FIG. 6 is a graph showing the charge capacity versus the discharge capacity in the charging methods used in Examples 7 to 9 according to the invention and in Comparative Examples 4 to 6.

FIG. 7 is a graph showing the current and voltage changes in the charging method used in Example 10 according to the invention.

FIG. 8 is a graph showing the voltage behavior in the charging method used in Example 10 according to the invention.

FIG. 9 is a graph showing the current and voltage changes in the charging method used in Example 11 according to the invention.

FIG. 10 is a graph showing the voltage behavior in the charging method used in Example 11 according to the invention.

FIG. 11 is a graph showing the voltage behavior in the charging method used in Comparative Example 7 according to the invention.

FIG. 12 is a graph showing the percent retention of discharge capacity after 500 charge/discharge cycles in Examples 12 to 14 according to the invention and in Comparative Example 8.

FIG. 13 is a graph showing the charging patterns in the charging methods used in Examples 15 and 16 according to the invention and in Comparative Examples 9 to 11.

FIG. 14 is a graph showing the relationship between the charging time and the discharge capacity in Examples 15 and 16 according to the invention and in Comparative Examples 9 to 11.

BEST MODE FOR CARRYING OUT THE INVENTION

The invention is described more fully below.

[Nonaqueous Electrolyte Secondary Battery 1]

The first nonaqueous electrolyte secondary battery according to the invention is, as described above, a nonaqueous electrolyte secondary battery composed of a positive electrode and a negative electrode which are made of a lithium ion-occluding and releasing material and a binder polymer, at least one separator for separating the positive

and negative electrodes, and a nonaqueous electrolyte which is composed of a lithium salt and an organic solvent. The electrolyte includes also a substance that undergoes oxidation at the positive electrode in a cell voltage range of 4.1 V to 5.2 V, which substance provokes at the positive electrode an oxidation reaction that differs from the lithium-releasing reaction.

In the invention, "battery capacity" (or "rated capacity") refers to the discharge capacity of a nonaqueous electrolyte secondary battery when the battery is constant-current/constant-voltage charged at 0.2C to a specific voltage cut-off, then is constant-current discharged at 0.2C to a specific end of discharge voltage. For example, in the case of a lithium ion cell in which the positive electrode is $LiCoO_2$ and the negative electrode is a carbonaceous material prepared from a readily graphitizable carbon material, the voltage cut-off during charging is 4.2 V and the end of discharge voltage is 2.7 V.

The oxidation reaction at the positive electrode occurs at a cell voltage of 4.1 to 5.2 V. If the oxidation reaction occurs at less than 4.1 V, the rated capacity for the battery may not be achieved. On the other hand, if the reaction takes place at a voltage above 5.2 V, the battery may rupture or heat up. A cell voltage of 4.2 to 4.8 V is preferred.

From a different perspective, the oxidation reaction at the positive electrode arises at a charge capacity which is at least 100% of the rated capacity. It is particularly advantageous for this oxidation reaction to occur at a charge capacity of at least 150%.

More specifically, it is preferable for the above electrode oxidation to occur in a range of 1.40 to 1.60 V with respect to an $AlO_x$ reference electrode. At less than 1.40 V, the electrode oxidation reaction may occur concurrent with or prior to the $LiCoO_2 \rightarrow Li_{0.5}CoO_2$ charging reaction, as a result of which the rated capacity may not be achieved. On the other hand, at more than 1.60 V, the $Li_{0.5}CoO_2 \rightarrow Li_{<0.3}CoO_2$ reaction may occur prior to the above electrode oxidation reaction, which can result in a loss in the reversibility of the positive electrode active material, the formation of an unstable high oxide, and runaway by the battery.

When a standard hydrogen electrode (SHE) is used instead as the reference, it is preferable for electrode oxidation to occur within a voltage range of 1.05 to 1.61 V with respect to the standard hydrogen electrode (SHE) in one or more organic solvent selected from among ethylene carbonate, propylene carbonate, vinylene carbonate and diethyl carbonate, and under normal temperature and standard atmospheric pressure conditions of 298.15 K and 101.325 Pa.

At less than 1.05 V, the electrode oxidation reaction may occur concurrent with or prior to the $LiCoO_2 \rightarrow Li_{0.5}CoO_2$ charging reaction, as a result of which the rated capacity may not be achieved. On the other hand, at more than 1.61 V, the reaction $Li_{0.5}CoO_2 \rightarrow Li_{<0.3}CoO_2$ reaction may occur prior to the above electrode oxidation reaction, which can result in a loss in the reversibility of the positive electrode active material, the formation of an unstable high oxide, and runaway by the battery.

Following the oxidation reaction at the positive electrode, it is preferable for a reduction reaction which differs from the lithium occlusion reaction to occur at the negative electrode.

No particular limitation is imposed on the type of oxidation reaction at the positive electrode and the type of reduction reaction at the negative electrode. However, it is preferable for oxygen and/or carbon dioxide to be generated by the above electrode oxidation, for the oxygen and/or carbon dioxide to oxidize the small amount of lithium metal that has formed on the negative electrode to $Li_2O$ and/or $Li_2CO_3$, and for the $Li_2O$ and/or $Li_2CO_3$ to be electrode reduced at the negative electrode to metallic lithium and/or lithium ions by the electrical energy supplied during charging.

By establishing a cyclic reaction system in which the oxygen and carbon dioxide formed by electrode oxidation oxidize lithium without any accompanying charge transfer, the oxidized lithium is subsequently electrode reduced and the substance formed by electrode reduction is again electrode oxidized, the electrical energy supplied during overcharging is consumed in these cyclic reactions, making it possible to efficiently prevent a rise in the cell voltage.

Yet, even if the cell voltage during overcharging can be kept from rising, should the electrode deteriorate at this time on account of an irreversible reaction, it is very likely that the battery will cease to function as a battery. It is therefore preferable, when the secondary battery of the invention is charged at 25°C and at a current of up to 10.00C based on the theoretical capacity of the positive electrode, for the battery to be free of positive electrode and negative electrode deterioration up to a charge capacity L defined as follows:

$$\text{charge capacity L (\%)} = 5 \times (\text{charging current C})^{-0.5} \times 100.$$

When $LiCoO_2$ is used as the positive electrode active material, the theoretical capacity is the electrical capacity corresponding to

$$LiCoO_2 \rightarrow 0.5Li^+ + Li_{0.5}CoO_2 + 0.5e^-.$$

In the present invention, the substance which is oxidized at the positive electrode is not subject to any particular limitation provided it is a substance which undergoes electrode oxidation at a cell voltage of from 4.1 to 5.2 V. However, it is preferable to use one or more substance selected from among compounds of the general formulas

R-CO-R, R-CO-OR, R-CO-NR'R, RO-CO-X-CO-OR and RR'N-CO-NR'R.

In these formulas, each R is independently a substituted or unsubstituted monovalent hydrocarbon group, each R' is independently a hydrogen atom or a substituted or unsubstituted monovalent hydrocarbon group, and X is a divalent organic group.

The above monovalent hydrocarbon groups may be ones having a linear, branched or cyclic construction, and moreover may be saturated hydrocarbon groups or unsaturated hydrocarbon groups.

The linear or branched hydrocarbon groups are preferably saturated or unsaturated hydrocarbon groups having 1 to 10 carbons. Specific examples include methyl, ethyl, n--propyl, i-propyl, n-butyl, i-butyl, t-butyl, n-pentyl, i-pentyl, neo-pentyl, n-hexyl, i-hexyl, vinyl, allyl, isopropenyl, 1-propenyl, 3-butenyl, 2-butenyl, 1-butenyl, 1-methyl-2-propenyl, 1-methyl-2-propenyl and 1-methyl-1-propenyl. To readily incur electrode oxidation under the above conditions, it is preferable for the hydrocarbon groups to be methyl, ethyl, n-propyl or i-propyl. Ethyl and i-propyl groups are especially preferred.

Cyclic hydrocarbon groups that may be used include cycloalkane groups represented by the formula $C_nH_{2n}$ (where n is a positive integer) and aromatic hydrocarbon groups. Specific examples include cyclopentyl, cyclohexyl, phenyl, tolyl, xylyl, cumenyl, mesityl and stylyl.

Linear hydrocarbon groups having an oxyalkylene structure can also be used. Those having the structure $-(CH_2CHR^aO)_n-$ (wherein n is 1 to 30, and $R^a$ is hydrogen or methyl) are especially preferred.

X represents a divalent organic group, such as an alkylene group of the formula $-(CH_2)_m-$ (wherein m is 1 to 30) or a group of the formula $-(CR_2)_m-$ (wherein R is the same as above, and m is 1 to 30).

In the compounds represented by the above general formulas, the two terminal R groups may bond to form a cyclic structure such as a lactone, lactide or lactam structure.

Specific examples of the above substances include acrylic acid or methacrylic acid esters such as glycidyl methacrylate, glycidyl acrylate, methoxydiethylene glycol methacrylate and methoxypolyethylene glycol methacrylate (average molecular weight, 200 to 1,200), as well as methacryloyl isocyanate and 2-hydroxymethylmethacrylic acid.

By adding to the nonaqueous electrolyte a substance which is electrode oxidized in this way at an electrode during overcharging, the electrical energy consumed by the overcharging reaction that occurs at the positive electrode is consumed in the electrode oxidation reaction on the substance rather than in the reaction that releases lithium from the positive electrode active material. Therefore, as shown in FIG. 2, a rise in cell voltage during overcharging of the nonaqueous electrolyte secondary battery is suppressed. Moreover, this electrode oxidation reaction discourages formation of the very highly oxidizing and thermally unstable $Li_{<0.3}CoO_2$ and reduces the risk of a runaway reaction occurring in the battery.

In the invention, the separator used in the above-described nonaqueous electrolyte secondary battery is not subject to any particular limitation, although it is preferably one having a porosity of at least 40%.

At a porosity of less than 40%, substances within the electrolyte are unable to move freely between the positive and negative electrodes, which may hinder the progress of the cyclic reactions described above. Accordingly, it is preferable for the porosity to be as high as possible, and especially 60% or more, so long as the separator is capable of separating the positive and negative electrodes.

The separator material is also not subject to any particular limitation, although it is preferably composed of at least one material selected from among cellulose, polypropylene, polyethylene and polyester. In this case as well, it is preferable for the separator porosity to be at least 60%.

Of the above separator materials, it is especially preferable to use cellulose, which has a better thermal stability than polyolefin resins. Cellulose can improve the thermal stability of the battery, thus making it possible to avoid the danger of abnormal overheating such as from an internal short circuit due to heat shrinkage of the separator.

When a separator made of cellulose is used, to effectively manifest the properties attributable to cellulose, it is desirable for the cellulose content to be at least 95 wt%, preferably at least 98 wt%, and most preferably at least 99 wt%.

The separator has a thickness of generally 20 to 50 μm, preferably 25 to 40 μm, and most preferably 25 to 35 μm. At a thickness within this range, the incidence of internal shorting within the battery can be reduced and a decline in the battery discharge load characteristics can be prevented.

The separator construction is not subject to any particular limitation, and may be a single-layer construction or a multilayer construction composed of a plurality of layered films or sheets. Advantageous use can also be made of nonwoven fabric-type separators made from fibers of one or more type selected from among cellulose, polypropylene,

polyethylene and polyester.

The nonaqueous electrolyte in the above-described nonaqueous electrolyte secondary battery may be a liquid electrolyte composed of a lithium salt and an organic solvent, or a polymer gel electrolyte obtained by gelating an electrolyte composition composed primarily of a lithium salt, a compound having a reactive double bond on the molecule and an organic solvent.

The lithium salt may be any which can be used in nonaqueous electrolyte secondary batteries such as lithium secondary cells and lithium ion secondary cells. Examples of suitable lithium salts include lithium tetrafluoroborate, lithium hexafluorophosphate, lithium perchlorate, lithium trifluoromethanesulfonate, the sulfonyl imide lithium salts of general formula (1) below

$$(R^1\text{-}SO_2)(R^2\text{-}SO_2)NLi \qquad (1),$$

the sulfonyl methide lithium salts of general formula (2) below

$$(R^3\text{-}SO_2)(R^4\text{-}SO_2)(R^5\text{-}SO_2)CLi \qquad (2),$$

lithium acetate, lithium trifluoroacetate, lithium benzoate, lithium p-toluenesulfonate, lithium nitrate, lithium bromide, lithium iodide and lithium tetraphenylborate.

In above formulas (1) and (2), $R^1$ to $R^5$ are each independently $C_{1-4}$ perfluoroalkyl groups which may have one or two ether linkages.

Specific examples of suitable sulfonyl imide lithium salts of general formula (1) include $(CF_3SO_2)_2NLi$, $(C_2F_5SO_2)_2NLi$, $(C_3F_7SO_2)_2NLi$, $(C_4F_9SO_2)_2NLi$, $(CF_3SO_2)(C_2F_5SO_2)NLi$, $(CF_3SO_2)(C_3F_7SO_2)NLi$, $(CF_3SO_2)(C_4F_9SO_2)NLi$, $(C_2F_5SO_2)(C_3F_7SO_2)NLi$, $(C_2F_5SO_2)(C_4F_9SO_2)NLi$ and $(CF_3OCF_2SO_2)_2NLi$.

Specific examples of suitable sulfonyl methide lithium salts of general formula (2) include $(CF_3SO_2)_3CLi$, $(C_2F_5SO_2)_3CLi$, $(C_3F_7SO_2)_3CLi$, $(C_4F_9SO_2)_3CLi$, $(CF_3SO_2)_2(C_2F_5SO_2)CLi$, $(CF_3SO_2)_2(C_3F_7SO_2)CLi$, $(CF_3SO_2)_2(C_4F_9SO_2)CLi$, $(CF_3SO_2)(C_2F_5SO_2)_2CLi$, $(CF_3SO_2)(C_3F_7SO_2)_2CLi$, $(CF_3SO_2)(C_4F_9SO_2)_2CLi$, $(C_2F_5SO_2)_2(C_3F_7SO_2)CLi$, $(C_2F_5SO_2)_2(C_4F_9SO_2)CLi$ and $(CF_3OCF_2SO_2)_3CLi$.

Of the above, lithium tetrafluoroborate, lithium hexafluorophosphate, general formula (1) and sulfonyl methide lithium salts of general formula (2) are preferred because they are ion-conductive salts having a particularly high ionic conductivity and excellent thermal stability. These ion-conductive salts may be used singly or as combinations of two or more thereof.

The lithium salt concentration in the electrolyte solution is generally 0.05 to 3 mol/L, and preferably 0.1 to 2 mol/L. Too low a lithium salt concentration may make it impossible to obtain a sufficient ionic conductivity, whereas too high a concentration may prevent complete dissolution in the organic solvent.

Examples of organic solvents that may be used include cyclic and acyclic carbonates, acyclic carboxylates, cyclic and acyclic ethers, phosphates, lactone compounds, nitrile compounds and amide compounds. These may be used singly or as mixtures thereof.

Examples of suitable cyclic carbonates include alkylene carbonates such as propylene carbonate (PC), ethylene carbonate (EC) and butylene carbonate, as well as vinylene carbonate (VC). Examples of suitable acyclic carbonates include dialkyl carbonates such as dimethyl carbonate (DMC), methyl ethyl carbonate (MEC) and diethyl carbonate (DEC). Examples of suitable acyclic carboxylates include methyl acetate and methyl propionate. Examples of suitable cyclic or acyclic ethers include tetrahydrofuran, 1,3-dioxolane and 1,2-dimethoxyethane. Examples of suitable phosphates include trimethyl phosphate, triethyl phosphate, ethyldimethyl phosphate, diethylmethyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphosphoran-2-one, 2-trifluoroethoxy-1,3,2-dioxaphosphoran-2-one and 2-methoxyethoxy-1,3,2-dioxaphosphoran-2-one. An example of a suitable lactone compound is γ-butyrolactone. An example of a suitable nitrile compound is acetonitrile. An example of a suitable amide compound is dimethylformamide.

If the nonaqueous electrolyte is a polymer gel electrolyte of the type mentioned above, the electrolyte composition also includes, in addition to the foregoing lithium salt and organic solvent, a compound having a reactive double bond on the molecule, and preferably includes as well a linear or branched polymeric compound.

That is, in cases where the polymer gel electrolyte obtained by gelating such a electrolyte composition is formed into a thin film and used as the electrolyte in a nonaqueous electrolyte secondary battery, to increase the physical strength (e.g., shape retention), a compound having a reactive double bond on the molecule is added and the compound is reacted to form a polymer.

It is particularly desirable for the compound bearing a reactive double bond on the molecule to have two or more reactive double bonds, because the reaction of this compound forms a three-dimensional network structure, making it possible to increase even further the shape retaining ability of the electrolyte.

When the nonaqueous electrolyte of the invention includes not only the above-described compound having at least two reactive double bonds, but also a linear or branched polymeric compound, there can be obtained an electrolyte having a semi-interpenetrating polymer network (semi-IPN) structure in which the molecular chains of the polymeric compound are intertwined with the three-dimensional network structure of the polymer formed by crosslinkage of the reactive double bond-bearing compounds. The shape retention and strength of the electrolyte can thus be further increased, and its adhesive properties and ion conductivity also enhanced.

The compound having a reactive double bond on the molecule is not subject to any particular limitation. Illustrative examples include acrylates and methacrylates such as glycidyl methacrylate, glycidyl acrylate, methoxydiethylene glycol methacrylate, methoxytriethylene glycol methacrylate and methoxypolyethylene glycol methacrylate (average molecular weight, 200 to 1,200); and other compounds having one acrylic acid group or methacrylic acid group on the molecule, such as methacryloyl isocyanate, 2-hydroxymethylmethacrylic acid and N,N-dimethylaminoethylmethacrylic acid.

In cases where a semi-IPN structure is formed using the compound having one reactive double bond and the polymeric compound described above, it is necessary to add also a compound having at least two reactive double bonds on the molecule.

Preferred examples of the compound having two or more reactive double bonds on the molecule include divinylbenzene, divinylsulfone, allyl methacrylate, ethylene glycol dimethacrylate, diethylene glycol dimethacrylate, triethylene glycol dimethacrylate, polyethylene glycol dimethacrylate (average molecular weight, 200 to 1,000), 1,3-butylene glycol dimethacrylate, 1,6-hexanediol dimethacrylate, neopentyl glycol dimethacrylate, polypropylene glycol dimethacrylate (average molecular weight, 400), 2-hydroxy-1,3-dimethacryloxypropane, 2,2-bis[4(methacryloxyethoxy)phenyl]propane, 2,2-bis[4-(methacryloxyethoxy-diethoxy)phenyl]propane, 2,2-bis[4-(methacryloxyethoxy-polyethoxy)phenyl]propane, ethylene glycol diacrylate, diethylene glycol diacrylate, triethylene glycol diacrylate, polyethylene glycol diacrylate (average molecular weight, 200 to 1,000), 1,3-butylene glycol diacrylate, 1,6-hexanediol diacrylate, neopentyl glycol diacrylate, polypropylene glycol diacrylate (average molecular weight, 400), 2-hydroxy-1,3-diacryloxypropane, 2,2-bis[4-(acryloxyethoxy)phenyl]propane, 2,2-bis[4-(acryloxyethoxy-diethoxy)phenyl]propane, 2,2-bis[4-(acryloxyethoxy-polyethoxy)phenyl]propane, trimethylolpropane triacrylate, trimethylolpropane trimethacrylate, tetramethylolmethane triacrylate, tetramethylolmethane tetraacrylate, water-soluble urethane diacrylate, water-soluble urethane dimethacrylate, tricyclodecane dimethanol acrylate, hydrogenated dicyclopentadiene diacrylate, polyester diacrylate and polyester dimethacrylate.

Of the aforementioned reactive double bond-bearing compounds, especially preferred reactive monomers include the polyoxyalkylene component-bearing diesters of general formula (3) below. The use of such a diester in combination with a polyoxyalkylene component-bearing monoester of general formula (4) below and a triester is recommended.

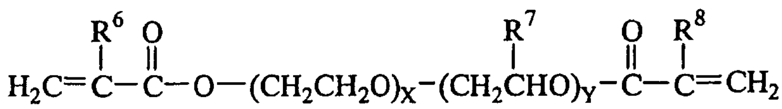

(3)

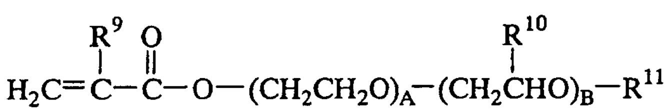

(4)

In formula (3), $R^6$ to $R^8$ are each independently a hydrogen atom or an alkyl group having 1 to 6 carbons, and preferably 1 to 4 carbons, such as methyl, ethyl, n-propyl, 1-propyl, n-butyl, i-butyl, s-butyl or t-butyl; and X and Y satisfy the condition $X \geq 1$ and $Y \geq 0$ or the condition $X \geq 0$ and $Y \geq 1$. $R^6$ to $R^8$ are most preferably methyl, ethyl, n-propyl, 1-propyl, n-butyl, i-butyl, s-butyl or t-butyl.

In formula (4), $R^9$ to $R^{11}$ are each independently a hydrogen atom or an alkyl group having 1 to 6 carbons, and preferably 1 to 4 carbons, such as methyl, ethyl, n-propyl, i-propyl, n-butyl, i-butyl, s-butyl or t-butyl; and A and B satisfy the condition $A \geq 1$ and $B \geq 0$ or the condition $A \geq 0$ and $B \geq 1$. $R^9$ to $R^{11}$ are most preferably methyl, ethyl, n-propyl, 1-propyl, n-butyl, i-butyl, s-butyl or t-butyl.

A preferred example of the compound of above formula (3) is one in which X is 9, Y is 0, and both $R^6$ and $R^8$ are $CH_3$. A preferred example of the compound of above formula (4) is one in which A is 2 or 9, B is 0, and both $R^9$ and $R^{11}$ are $CH_3$.

The triester is preferably trimethylolpropane trimethacrylate.

The above-described polyoxyalkylene component-bearing diester and polyoxyalkylene component-bearing monoester, in admixture with the lithium salt, the organic solvent and, if necessary, a polymeric compound, are exposed to a suitable form of radiation (e.g., UV light, electron beams, x-rays, gamma rays, microwaves, radio-frequency radiation), and heated to form a three-dimensional network structure or a semi-IPN-type three-dimensional crosslinked network structure.

The relative proportions of the above-described polyoxyalkylene component-bearing diester, the polyoxyalkylene component-bearing monoester and the triester are set as appropriate for the length of the polyoxyalkylene components and are not subject to any particular limitation. A diester/monoester molar ratio of 0.1 to 2, and especially 0.3 to 1.5, and a diester/triester molar ratio of 2 to 15, and especially 3 to 10, are preferred for improved electrolyte strength.

The linear or branched polymeric compound used together with the above-described compound having two or more reactive double bonds to form a semi-IPN structure in the polymer gel electrolyte is not subject to any particular limitation, although the use of (a) a hydroxyalkyl polysaccharide derivative, (b) an oxyalkylene branched polyvinyl alcohol derivative, (c) a polyglycidol derivative, or (d) a cyano-substituted monovalent hydrocarbon group-bearing polyvinyl alcohol derivative is preferred.

Examples of suitable hydroxyalkyl polysaccharide derivatives (a) include (1) hydroxyethyl polysaccharides obtained by reacting ethylene oxide with a polysaccharide of natural origin such as cellulose, starch or pullulan, (2) hydroxypropyl polysaccharides obtained by reacting propylene oxide with such polysaccharides, and (3) dihydroxypropyl polysaccharides obtained by reacting glycidol or 3-chloro-1,2-propanediol with such polysaccharides. Some or all of the hydroxyl groups on these hydroxyalkyl polysaccharides may be capped with substituents through ester or ether linkages.

The above-described hydroxyalkyl polysaccharides have a molar substitution of 2 to 30, and preferably 2 to 20. At a molar substitution of less than 2, the salt-dissolving ability of the polysaccharide may become so low as to make it unsuitable for use.

Oxyalkylene branched polyvinyl alcohol derivatives (b) suitable for use as the polymeric compound include polymeric compounds which bear on the molecule polyvinyl alcohol units of general formula (5) below, which have an average degree of polymerization of at least 20, and in which some or all of the hydroxyl groups on the polyvinyl alcohol units are substituted with oxyalkylene-bearing groups having an average molar substitution of at least 0.3.

$$-(CH_2-\underset{OH}{\underset{|}{CH}})_n- \qquad (5)$$

In formula (5), the letter n is preferably from 20 to 10,000.

Because this type of polymeric compound has a high oxyalkylene fraction, it has the ability to dissolve a large amount of salt. In addition, the molecule contains many oxyalkylene segments which permit the movement of ions, resulting in a high ion mobility. This type of polymeric compound is thus capable of exhibiting a high ionic conductivity. Moreover, because these polymeric compounds have a high tackiness, they act as a binder component and are capable of firmly bonding the positive and negative electrodes.

Examples of polymeric compounds of above formula (5) include [1] polymeric compounds obtained by reacting a polyvinyl alcohol unit-containing polymeric compound with an oxirane compound such as ethylene oxide, propylene oxide or glycidol (e.g., dihydroxypropylated polyethylene vinyl alcohol, propylene oxide-modified polyvinyl alcohol); and [2] polymeric compounds obtained by reacting a polymeric compound having polyvinyl alcohol units with a polyoxyalkylene compound having terminal hydroxy-reactive substituents.

Here, the polyvinyl alcohol unit-bearing polymeric compound is a polymeric compound which has a number-average degree of polymerization of at least 20, preferably at least 30, and most preferably at least 50, which has polyvinyl alcohol units on the molecule, and in which some or all of the hydroxyl groups on the polyvinyl alcohol units are substituted with oxyalkylene-containing groups. For the sake of handleability, the upper limit in the number-average degree of polymerization in this case is preferably not more than 2,000, more preferably not more than 500, and most preferably not more than 200.

It is most preferable for the above-described polyvinyl alcohol unit-bearing polymeric compound to have a number-average degree of polymerization within the above range and to be a homopolymer in which the fraction of

polyvinyl alcohol units in the molecule is at least 98 mol%. However, the polyvinyl alcohol unit-bearing polymeric compound is not limited to the above, and may be one which has a number-average degree of polymerization within the above range and which has a polyvinyl alcohol fraction of preferably at least 60 mol%, and more preferably at least 70 mol%. Illustrative examples of such compounds that may be used include polyvinyl formals in which some of the hydroxyl groups on the polyvinyl alcohol have been converted to formal, modified polyvinyl alcohols in which some of the hydroxyl groups on the polyvinyl alcohol have been converted to alkyls; poly(ethylene vinyl alcohols), partially saponified polyvinyl acetates, and other modified polyvinyl alcohols.

This polymeric compound is one in which some or all of the hydroxyl groups on the above-described polyvinyl alcohol units are substituted with oxyalkylene-containing groups having an average molar substitution of at least 0.3 (moreover, some of the hydrogen atoms on these oxyalkylene groups may be substituted with hydroxyl groups). Preferably at least 30 mol%, and most preferably at least 50 mol%, of the hydroxyl groups are substituted in this way.

The above-mentioned polyglycidol derivative (c) contains units of formula (6) (referred to hereinafter as "A units")

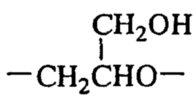

(6)

and units of formula (7) (referred to hereinafter as "B units")

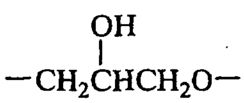

(7) .

The ends of the molecular chain are capped with specific substituents.

The polyglycidol can be prepared by polymerizing glycidol or 3-chloro-1,2-propanediol, although it is generally preferable to carry out polymerization from glycidol as the starting material and using a basic catalyst or a Lewis acid catalyst.

The total number of A and B units on the polyglycidol molecule is at least two, preferably at least six, and most preferably at least ten. There is no particular upper limit, although it is generally preferable that the total number of such units not exceed about 10,000. The overall number of these respective units may be set as appropriate based on such considerations as the flow properties and viscosity required of the polyglycidol. The ratio of A units to B units in the molecule, expressed as A/B, is within a range of 1/9 to 9/1, and preferably 3/7 to 7/3. The order in which the A and B units appear is not regular. Any combination is possible.

The polyglycidol has a polyethylene glycol equivalent weight-average molecular weight (Mw), as determined by gel permeation chromatography (GPC), within a range of preferably 200 to 730,000, more preferably 200 to 100,000, and most preferably 600 to 20,000. The average molecular weight ratio (Mw/Mn) is preferably 1.1 to 20, and most preferably 1.1 to 10.

These polymeric compounds (a) to (c) may be hydroxyl-capped polymer derivatives in which some or all, and preferably at least 10 mol%, of the hydroxyl groups on the molecule are capped with one or more type of monovalent substituent selected from among halogen atoms, substituted or unsubstituted monovalent hydrocarbon groups having 1 to 10 carbons, $R^{12}CO$- groups (wherein $R^{12}$ is a substituted or unsubstituted monovalent hydrocarbon group of 1 to 10 carbons), $R^{12}{}_3Si$- groups (wherein $R^{12}$ is as defined above), amino groups, alkylamino groups and phosphorus-containing groups.

Illustrative examples of the substituted or unsubstituted monovalent hydrocarbon groups having 1 to 10 carbons include alkyl groups such as methyl, ethyl, propyl, i-propyl, t-butyl and pentyl, aryl groups such as phenyl and tolyl, aralkyl groups such as benzyl, alkenyl groups such as vinyl, and any of the foregoing in which some or all of the hydrogen atoms have been substituted with halogen atoms, cyano groups, hydroxyl groups or amino groups. Any one or combination of two or more of these types of groups may be used.

Capping the hydroxyl groups on the above polymeric compounds (a) to (c) with highly polar substituents increases the polarity (and thus the dielectric constant) of the polymer matrix, thus making it possible to prevent the decline in conductivity which readily arises in a low dielectric constant polymer matrix due to the recombination of dissociated cations and counter ions (anions). Moreover, when capping is done using substituents that have fire-retarding and hydrophobic properties, the polymeric compound can be imparted with desirable characteristics, such as

hydrophobicity and fire retardance.

To increase the dielectric constant of above polymeric compounds (a) to (c), the oxyalkylene chain-bearing polymeric compounds (a) to (c) are reacted with a hydroxy-reactive compound so as to cap the hydroxyl groups on these polymeric compounds with highly polar substituents.

Although the highly polar substituents used for this purpose are not subject to any particular limitation, neutral substituents are preferable to ionic substituents. Exemplary substituents include substituted and unsubstituted monovalent hydrocarbon groups of 1 to 10 carbons, and $R^{12}CO$- groups (wherein $R^{12}$ is as defined above). If necessary, capping may also be carried out with other suitable substituents, such as amino groups or alkylamino groups.

To confer polymeric compounds (a) to (c) with hydrophobic properties and fire retardance, the hydroxyl groups on the above polymeric compounds may be capped with, for example, halogen atoms, $R^{12}{}_3Si$- groups (wherein $R^{12}$ is as defined above) or phosphorus-containing groups.

Examples of suitable $R^{12}{}_3Si$- groups include those in which $R^{12}$ represents the same substituted or unsubstituted monovalent hydrocarbon groups having 1 to 10 carbons, and preferably 1 to 6 carbons, as above. $R^{12}$ preferably stands for alkyl groups. Trialkylsilyl groups, and especially trimethylsilyl groups, are preferred.

Additional examples of suitable substituents include amino groups, alkylamino groups and phosphorus-containing groups.

The proportion of end groups capped with the above substituents is at least 10 mol%, preferably at least 50 mol%, and most preferably at least 90 mol%. It is even possible to cap substantially all the end groups with the above substituents, representing a capping ratio of about 100 mol%.

The above-mentioned cyano-substituted monovalent hydrocarbon group-bearing polyvinyl alcohol derivative (d) is preferably a polymeric compound which has an average degree of polymerization of at least 20, which bears on the molecule polyvinyl alcohol units of above general formula (5), and in which some or all of the hydroxyl groups on the polyvinyl alcohol units are substituted with cyano-substituted monovalent hydrocarbon groups.

Because this polymeric compound has relatively short side chains, the viscosity of the electrolyte can be held to a low level.

Examples of such polymer compounds include polyvinyl alcohols in which some or all of the hydroxyl groups have been substituted with cyano-substituted monovalent hydrocarbon groups such as cyanoethyl, cyanobenzyl or cyanobenzoyl. Cyanoethyl-substituted polyvinyl alcohol is especially preferred because the side chains are short.

Various known methods may be used to substitute the hydroxyl groups on the polyvinyl alcohol with cyano-substituted monovalent hydrocarbon groups.

If necessary, to lower the resistance at the interface between the positive and negative electrodes and thereby enhance the charge/discharge cycle properties, and to enhance the ability of the electrolyte to wet the separator, the nonaqueous electrolyte may have added thereto one or more of various compounds, including polyimides, polyacetals, polyalkylene sulfides, polyalkylene oxides, cellulose esters, polyvinyl alcohols, polybenzoimidazoles, polybenzothiazoles, silicone glycols, vinyl acetate, acrylic acid, methacrylic acid, polyether-modified siloxanes, polyethylene oxides, amide compounds, amine compounds, phosphoric acid compounds and fluorinated nonionic surfactants. Of these, the use of fluorinated nonionic surfactants is preferred.

The positive electrode in the nonaqueous electrolyte secondary battery of the invention may be one that is produced by coating one or both sides of a positive electrode current collector with a positive electrode binder composition composed primarily of a binder polymer and a positive electrode active material.

Alternatively, a positive electrode binder composition composed primarily of a binder polymer and a positive electrode active material may be melted and blended, then extruded as a film to form a positive electrode.

The binder polymer may be any polymer capable of being used in the present applications. For example, use may be made of (I) a thermoplastic resin having a swelling ratio, as defined by the formula below, in a range of 150 to 800%, (II) a fluoropolymer material, or a combination of two or more polymers of types (I) and (II).

The above thermoplastic resin (I) has a swelling ratio, as determined from the formula indicated below, within a range of 150 to 800%, preferably 250 to 500%, and most preferably 250 to 400%.

$$\text{Swelling ratio (\%)} = \frac{\text{Weight in grams of swollen thermoplastic resin after 24 hours immersion in electrolyte solution at 20°C (g)}}{\text{Weight in grams of thermoplastic resin before immersion in electrolyte solution at 20°C (g)}} \times 100,$$

The thermoplastic resin is preferably a thermoplastic polyurethane resin obtained by reacting a polyol compound with a polyisocyanate compound and an optional chain extender.

Suitable thermoplastic polyurethane resins include not only polyurethane resins having urethane linkages,

but also polyurethane-urea resins having both urethane linkages and urea linkages.

The polyol compound is preferably a polyester polyol, a polyester polyether polyol, a polyester polycarbonate polyol, a polycaprolactone polyol, or a mixture thereof.

The polyol compound has a number-average molecular weight of preferably 1,000 to 5,000, and most preferably 1,500 to 3,000. A polyol compound having too small a number-average molecular weight may lower the physical properties of the resulting thermoplastic polyurethane resin film, such as the heat resistance and tensile elongation. On the other hand, too large a number-average molecular weight increases the viscosity during synthesis, which may lower the production stability of the thermoplastic polyurethane resin being prepared. The number-average molecular weights used here in connection with polyol compounds are calculated based on the hydroxyl values measured in accordance with JIS K1577.

Illustrative examples of the polyisocyanate compound include aromatic diisocyanates such as tolylene diisocyanate, 4,4'-diphenylmethane diisocyanate, p-phenylene diisocyanate, 1,5-naphthylene diisocyanate and xylylene diisocyanate; and aliphatic or alicyclic diisocyanates such as hexamethylene diisocyanate, isophorone diisocyanate, 4,4'-dicyclohexylmethane diisocyanate and hydrogenated xylylene diisocyanate.

The chain extender is preferably a low-molecular-weight compound having a molecular weight of not more than 300 and bearing two active hydrogen atoms capable of reacting with isocyanate groups.

Various known compounds may be used as such low-molecular-weight compounds. Illustrative examples include aliphatic diols such as ethylene glycol, propylene glycol and 1,3-propanediol; aromatic or alicyclic diols such as 1,4-bis(β-hydroxyethoxy)benzene, 1,4-cyclohexanediol and bis(β-hydroxyethyl) terephthalate; diamines such as hydrazine, ethylenediamine, hexamethylenediamine and xylylenediamine; and amino alcohols such as adipoyl hydrazide. Any one or combinations of two or more of these may be used.

The thermoplastic polyurethane resin typically includes 5 to 200 parts by weight, and preferably 20 to 100 parts by weight, of the polyisocyanate compound and 1 to 200 parts by weight, and preferably 5 to 100 parts by weight, of the chain extender per 100 parts by weight of the polyol compound.

A thermoplastic resin containing units of general formula (8) below

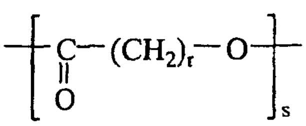

(8) ,

wherein the letter r is 3 to 5 and the letter s is an integer ≥5, may be used as the binder polymer of formula (I) above.

Preferred examples of fluoropolymer materials (II) that may be used as the binder polymer include polyvinylidene fluoride (PVDF), vinylidene fluoride-hexafluoropropylene copolymers (P(VDF-HFP)) and vinylidene fluoride-chlorotrifluoroethylene copolymers (P(VDF-CTFE)). Of these, fluoropolymers having a vinylidene fluoride content of at least 50 wt%, and especially at least 70 wt%, are preferred. The upper limit in the vinylidene fluoride content of the fluoropolymer is about 97 wt%.

The weight-average molecular weight of the fluoropolymer is not subject to any particular limitation, although the weight-average molecular weight is preferably 500,000 to 2,000,000, and most preferably 500,000 to 1,500,000. Too low a weight-average molecular weight may result in an excessive decline in physical strength.

The positive electrode current collector may be made of a suitable material such as stainless steel, aluminum, titanium, tantalum or nickel. Of these, aluminum foil or aluminum oxide foil is especially preferred both in terms of performance and cost. This current collector may be used in any of various forms, including foil, expanded metal, sheet, foam, wool, or a three-dimensional structure such as a net.

The positive electrode active material is selected as appropriate for the type of battery and other considerations. Examples of positive electrode active materials that are suitable for use in the positive electrode of a lithium secondary cell include group I metal compounds such as CuO, $Cu_2O$, $Ag_2O$, CuS and $CuSO_2$; group IV metal compounds such as TiS, $SiO_2$ and SnO; group V metal compounds such as $V_2O_5$, $V_6O_{13}$, $VO_x$, $Nb_2O_5$, $Bi_2O_3$ and $Sb_2O_3$; group VI metal compounds such as $CrO_3$, $Cr_2O_3$, $MoO_3$, $MoS_2$, $WO_3$ and $SeO_2$; group VII metal compounds such as $MnO_2$ and $Mn_2O_4$; group VIII metal compounds such as $Fe_2O_3$, FeO, $Fe_3O_4$, $Ni_2O_3$, NiO and $CoO_2$; and electrically conductive polymeric compounds such as polypyrrole, polyaniline, poly(p-phenylene), polyacetylene and polyacene.

Suitable positive electrode active materials that may be used in lithium ion secondary cells include chalcogen compounds capable of occluding and releasing lithium ions, and lithium ion-containing chalcogen compounds (lithium-containing double oxides).

Examples of such chalcogen compounds capable of occluding and releasing lithium ions include $FeS_2$, $TiS_2$, $MoS_2$, $V_2O_5$, $V_6O_{13}$ and $MnO_2$.

Specific examples of lithium ion-containing chalcogen compounds (lithium-containing double oxides) include

$LiCoO_2$, $LiMnO_2$, $LiMn_2O_4$, $LiMo_2O_4$, $LiV_3O_8$, $LiNiO_2$ and $Li_xNi_yM_{1-y}O_2$ (wherein M is one or more metal element selected from among cobalt, manganese, titanium, chromium, vanadium, aluminum, tin, lead and zinc; $0.05 \leq x \leq 1.10$; and $0.5 \leq y \leq 1.0$).

In addition to the binder resin and the positive electrode active material described above, if necessary, the binder composition for the positive electrode may include also an electrically conductive material. Illustrative examples of the conductive material include carbon black, Ketjenblack, acetylene black, carbon whiskers, carbon fibers, natural graphite and artificial graphite.

The positive electrode binder composition typically includes 1,000 to 5,000 parts by weight, and preferably 1,200 to 3,500 parts by weight, of the positive electrode active material and 20 to 500 parts by weight, and preferably 50 to 400 parts by weight, of the conductive material per 100 parts by weight of the binder resin.

The negative electrode used in the nonaqueous electrolyte secondary battery of the invention is produced by coating one or both sides of a negative electrode current collector with a negative electrode binder composition composed primarily of a binder polymer and a negative electrode active material. The same binder polymer may be used as in the positive electrode.

Alternatively, the negative electrode binder composition composed primarily of a binder polymer and a negative electrode active material may be melted and blended, then extruded as a film to form a negative electrode.

The negative electrode current collector may be made of a suitable material such as copper, stainless steel, titanium or nickel. Of these, copper foil or a metal foil whose surface is covered with a copper plating film is especially preferred both in terms of performance and cost. The current collector used may be in any of various forms, including foil, expanded metal, sheet, foam, wool, or a three-dimensional structure such as a net.

Materials that may be used as the negative electrode active material include alkali metals, alkali metal alloys, carbonaceous materials, and the same materials as those mentioned above for the positive electrode active material.

Examples of suitable alkali metals include lithium, sodium and potassium. Examples of suitable alkali metal alloys include metallic lithium, Li-Al, Li-Mg, Li-Al-Ni, sodium, Na-Hg and Na-Zn.

Examples of suitable carbonaceous materials include graphite, carbon black, coke, glassy carbon, carbon fibers, and sintered bodies obtained from any of these.

In a lithium ion secondary cell, use is made of a material which reversibly occludes and releases lithium ions.

Carbonaceous materials that may be used as such a material include non-graphitizable carbonaceous materials and graphite materials. Specific examples include pyrolytic carbon, coke (e.g., pitch coke, needle coke, petroleum coke), graphites, glassy carbons, fired organic polymeric materials (materials such as phenolic resins or furan resins that have been carbonized by firing at a suitable temperature), carbon fibers, and activated carbon. Use can also be made of materials capable of reversibly occluding and releasing lithium ions, including polymers such as polyacetylene and polypyrrole, and oxides such as $SnO_2$.

If necessary, the binder composition for the negative electrode may include also a conductive material. Examples of conductive materials suitable for this purpose include those mentioned above for the positive electrode binder composition.

The negative electrode binder composition typically includes 500 to 1,700 parts by weight, and preferably 700 to 1,300 parts by weight, of the negative electrode active material and 0 to 70 parts by weight, and preferably 0 to 40 parts by weight, of the conductive material per 100 parts by weight of the binder polymer.

The above-described negative electrode binder compositions and positive electrode binder compositions generally are used in the form of a paste after the addition of a dispersing medium. Suitable dispersing media include polar solvents such as N-methyl-2-pyrrolidone (NMP), dimethylformamide, dimethylacetamide and dimethylsulfamide. The dispersing medium is typically added in an amount of about 30 to 300 parts by weight per 100 parts by weight of the positive electrode or negative electrode binder composition.

No particular limitation is imposed on the method of shaping the positive and negative electrodes as thin films, although it is preferable to apply the composition by a suitable means such as roller coating with an applicator roll, screen coating, doctor blade coating, spin coating or bar coating so as to form an active material layer having a uniform thickness when dry of 10 to 200 μm, and especially 50 to 150 μm.

[Nonaqueous Electrolyte Secondary Battery 2]

The second nonaqueous electrolyte secondary battery according to the invention is a nonaqueous electrolyte secondary battery composed of a positive electrode, a negative electrode, a separator disposed between the positive and negative electrodes, and a polymer gel electrolyte. The separator is a porous film or porous sheet composed primarily of cellulose.

By using such a porous film or porous sheet composed primarily of cellulose, the charging characteristics, rate capability, safety and manufacturability of the nonaqueous electrolyte secondary battery can be enhanced. Moreover, the overcharging characteristics can be increased.

The cellulose-containing porous film or porous sheet is not subject to any particular limitation, although the use of paper formed from cellulose fibers is preferred from the standpoint of production costs, lyophilic properties with respect to the electrolyte solution or electrolyte composition, battery characteristics and overcharge characteristics. Use can also be made of paper made from beaten cellulose fibers.

The above-described cellulose has a heat resistance of at least 200°C and a better thermal stability than polyolefin resins, and can therefore enhance the thermal stability of the battery. The use of such cellulose thus makes it possible to avoid the danger of abnormal overheating due to internal shorting from thermal shrinkage of the separator.

When a separator composed primarily of cellulose is used, the hydroxyl groups on the cellulose molecules strongly interact with highly polar electrolyte molecules, resulting in a better lyophilicity than in polyolefin-based separators. Thus, the electrolyte solution has a large rate of penetration, improving work efficiency during battery assembly. Moreover, deterioration in battery performance due to incomplete immersion of the separator in the electrolyte solution does not arise.

In addition, the surfaces of the cellulose fibers, which have a large surface area, interact with the electrolyte solution, increasing retention of the electrolyte and discouraging liquid exudation. As a result, improvements in the charge/discharge characteristics, high-temperature retention properties and safety of the battery can be achieved.

No particular limitation is imposed on the cellulose content of the separator. However, to more effectively manifest the properties attributable to use of the above-described cellulose, it is advantageous for the cellulose content to be at least 95 wt%, preferably at least 98 wt%, and most preferably at least 99 wt%.

Cellulose has a high compatibility with the liquid electrolyte. But because it is also highly hydrophilic, the molecules of cellulose contain a large amount of moisture. Problems arising from the presence of moisture within the separator can be avoided by thoroughly drying during battery manufacture either the separator itself or a laminate or coiled body of the separator in combination with the positive and negative electrodes.

The porous film or porous sheet has a thickness of 20 to 50 μm, preferably 25 to 40 μm, and most preferably 25 to 35 μm, and a porosity of 65 to 85%, preferably 68 to 80%, and most preferably 70 to 75%. By using a separator which satisfies these conditions, there can be obtained a nonaqueous electrolyte secondary battery having excellent large current discharge characteristics.

At a thickness of less than 20 μm, the incidence of internal shorting within the battery may rise. On the other hand, at a thickness greater than 50 μm, the discharge load characteristics of the battery may worsen.

At a porosity of less than 65%, permeability to the electrolyte solution may worsen. Moreover, the amount of polymer gel electrolyte per unit volume decreases, which may lower the ionic conductivity and diminish the battery characteristics. On the other hand, at more than 85%, the large current discharge characteristics of the battery do improve, but the physical strength declines, which may compromise handleability during the assembly operations. Moreover, the incidence of internal shorting may increase.

The construction of the separator is not subject to any particular limitation. The separator may have a single-layer construction, or may have a multilayer construction composed of a plurality of stacked films or sheets.

The polymer gel electrolyte in the above nonaqueous electrolyte secondary battery is preferably one obtained by gelating an electrolyte composition composed primarily of an ion-conductive salt, a compound having reactive double bonds on the molecule, and an organic solvent.

The ion-conductive salt may be any that can be used in nonaqueous electrolyte secondary batteries such as lithium secondary cells and lithium ion secondary cells. For example, use can be made of the same ion-conductive salts as those mentioned above in connection with the first nonaqueous electrolyte secondary battery.

The compound having reactive double bonds on the molecule, the organic solvent, the concentration of the ion-conductive salt in the electrolyte, and other constituent features selected for use in the second nonaqueous electrolyte secondary battery may be the same as those mentioned above in connection with the first nonaqueous electrolyte secondary battery.

It is advantageous for the above-described first and second nonaqueous electrolyte secondary batteries to have the following properties:

(A) a cell voltage of less than 5.5 V when overcharged at 25°C to a charge capacity which is 250% the cell capacity; and/or

(B) a battery surface temperature of less than 90°C when overcharged at 25°C to a charge capacity which is 250% the cell capacity.

To further enhance the safety of the secondary battery, it is advantageous for the nonaqueous electrolyte secondary battery to satisfy the above cell voltage and/or surface temperature conditions even when overcharged to a charge capacity of more than 250%, and preferably more than 300%, the cell capacity.

At a cell voltage of 5.5 V or more, there exists a possibility that the battery will rupture, generate heat or incur an irreversible reaction, thus ceasing to function as a battery and increasing the level of danger. It is therefore desirable

to hold the cell voltage during overcharging to less than 5.5 V, preferably less than 5.3 V, and most preferably less than 5.1 V.

At a surface temperature of 90°C or more, there is an increased possibility of thermal runaway by the battery. It is thus preferable for the battery during overcharging to have a surface temperature of less than 90°C, preferably less than 70°C, and most preferably less than 60°C.

Moreover, in the above-described nonaqueous electrolyte secondary batteries, it is desirable to be able to ensure safety even when the battery is overcharged at a larger current. Hence, it is desirable for above conditions (A) and/or (B) to be satisfied even when the battery is charged at a current larger than 2C, and preferably larger than 2.5C.

It is also preferable for these nonaqueous electrolyte secondary batteries to be capable of discharging at least 60% of the cell capacity after being overcharged at 25°C to 250% of the cell capacity.

That is, in cases where only a very low capacity can be discharged following overcharging, the battery will most likely be very safe but have a poor performance. Therefore, after overcharging, it is desirable for the battery to be dischargeable again to at least 60%, and preferably at least 80%, of the cell capacity.

In this case, it is also advantageous for the nonaqueous electrolyte secondary battery to be dischargeable to at least 60% of the battery capacity even when overcharged to a charge capacity which is at least 250%, and preferably at least 300%, of the cell capacity.

It is also desirable for the nonaqueous electrolyte secondary battery to have a cell capacity of at least 100 mAh, preferably at least 200 mAh, and most preferably at least 300 mAh. At a cell capacity of less than 100 mAh, the influence of materials such as the outer enclosure that play no part in the storage of electricity becomes large, which may lower the energy density.

The nonaqueous electrolyte secondary batteries of the invention have an energy density which is preferably at least 270 Wh/L, and most preferably at least 300 Wh/L. An energy density of less than 270 Wh/L is too low, making it likely that the battery will have a poor practical utility.

Each of the nonaqueous electrolyte secondary batteries of the invention is assembled by stacking, fan-folding or winding, moreover forming into a laminated or coin-like shape a cell assembly composed of the separator disposed between the positive and negative electrodes, and placing the cell assembly within a battery housing such as a battery can or a laminate pack. The battery housing is mechanically sealed if it is a can or heat-sealed if it is a laminate pack. In constructing the battery, the separator is disposed between the positive electrode and the negative electrode, and the resulting cell assembly is placed within the battery housing. The cell assembly is then filled with an electrolyte solution or a polymer gel electrolyte composition. If a polymer gel electrolyte composition is used, it is subjected to gelation by heating or some other means.

As described above, each of the nonaqueous electrolyte secondary batteries of the invention has excellent overcharging characteristics and is free of danger even when overcharged in the absence of a protective circuit. These qualities make it possible to simplify the battery production operations and reduce production costs.

The nonaqueous electrolyte secondary batteries of the invention are well-suited for use in a variety of applications, including main power supplies for portable electronic equipment such as video cameras, notebook computers, cell phones and what are known as "personal handyphone systems" (PHS) in Japan, uninterruptible power supplies for equipment such as personal computers -- including use as memory backup power supplies, in electric cars and hybrid cars, and together with solar cells as energy storage systems for solar power generation. When a plurality of these secondary batteries are connected in series and/or in parallel, they can be used as power supplies which have an excellent safety during overcharging.

In particular, because the nonaqueous electrolyte secondary batteries of the invention have excellent overcharging characteristics, they are well-suited for high-speed charging by the intermittent or pulsed charging methods using dc current that are described more fully below.

By using such a charging method on the inventive nonaqueous electrolyte secondary batteries endowed with excellent overcharging characteristics and carrying out energy-efficient charging, the batteries can be charged more rapidly than is possible with prior-art secondary batteries. Accordingly, the nonaqueous electrolyte secondary batteries having excellent overcharging characteristics of the present invention are suitable for use as batteries in electrical equipment that must be charged at a high speed.

Examples of such electrical equipment requiring a high-speed charge include portable equipment such as cell phones, personal data assistants (PDA), laptop computers, portable audio recorder/players and portable video players (e.g., cassette players, cassette recorders, CD players, MD players, MD recorders, DVD players), video recorders, film cameras and digital cameras; mobile or transportation equipment such as electric cars, hybrid cars, electric motorbikes, electric-assist bicycles, electric wheelchairs, electric three-wheeled vehicles, electric forklifts, electric platters and railway cars; and household electrical appliances, including electric-powered tools and other devices for the home such as vacuum cleaners, irons, cordless phone handsets, shavers, electric toothbrushes, radio-controlled and other electric-powered hobby items, electronic games, electric drills and electric cutters. Preferred uses in uninterruptible power supply-related applications include power supplies for elevators, air-conditioning equipment, emergency

lighting, medical equipment such as life support systems, and alarm systems. [Method of Charging Nonaqueous Electrolyte Secondary Batteries]

The inventive method of charging nonaqueous electrolyte secondary batteries is characterized in that, when a nonaqueous electrolyte secondary battery made up of a positive electrode and a negative electrode which are composed of a lithium-occluding and releasing material and a binder polymer, at least one separator for separating the positive and negative electrodes, and a lithium salt-containing nonaqueous electrolyte is subjected to charging which is carried out by combining various charging patterns P, each specified by a current value X (in amperes, where $X \geq 0$ A) and a charging time t (in seconds, where $t \neq 0$ s), in the manner $P_1[X_1, t_1] \rightarrow P_2[X_2, t_2] \rightarrow P_3[X_3, t_3] \cdots\rightarrow P_n[X_n, t_n] \rightarrow P_{n+1}[X_{n+1}, t_{n+1}]$ (wherein n is an integer ≥ 1), the consecutive charging patterns P have mutually differing current values X.

That is, the relationship among the current values (in amperes) $X_n$, $X_{n+1}$, and $X_{n+2}$ for $P_n$, $P_{n+1}$, $P_{n+2}$ is such that $X_n \neq X_{n+1}$ and $X_{n+1} \neq N_{n+2}$.

At the same time, the relationship between the non-consecutive current values $X_n$ and $X_{n+2}$ may be either $X_n = X_{n+2}$ or $X_n \neq X_{n+2}$. No particular limitation is imposed on the relative sizes of these current values. However, when charging is carried out at a large current value $X_n$ to destroy the passivating layers which have formed on the electrodes and the electrode active materials, the large amount of energy applied to the electrodes and electrode active materials apparently raises the electrodes and electrode active materials to high temperatures at a microscopic level. Accordingly, to mitigate heat generation from the prior charging pattern, it is preferable to set the current value $X_{n+1}$ for the next charging pattern to a value lower than $X_n$; i.e., $X_n > X_{n+1}$.

The charging time $t_n$ for each charging pattern $P_n$ is set to a value other than 0 seconds.

The level of charge for the above-described secondary battery may be anywhere from 0 to 100%. The cell capacity must be known when setting the amount of charging current. For example, if the cell capacity is 2 Ah, the amount of current that can be charged or discharged in one hour, namely 2A, is represented as a charging current value of 1C.

The charging current value $X_n$ in charging pattern $P_n$ is preferably at least 1C. To increase the charging efficiency and shorten the time required to achieve a full charge, and also to break up passivating layers that have formed on the electrode surfaces and the electrode active material surfaces and thereby enhance the cycle life of the battery, it is advantageous for the current value during charging to be at least 3C, and preferably at least 5C.

There is no particular upper limit in the charging current value, although this is generally about 10 to 50C.

It is especially preferable for the current value $X_n$ in the above charging pattern $P_n$ to be at least 3C, and for the current value $X_{n+1}$ in the charging pattern $P_{n+1}$ to be 0 A.

Carrying out pulse charging in which the current value $X_{n+1}$ is 0 A enables energy-efficient charging to take place while preventing an excessive rise in the voltage of the nonaqueous electrolyte secondary battery. As a result, the time required to achieve a full charge can be further shortened.

Moreover, when pulse charging is carried out at a current value $X_n$ in charging pattern $P_n$ of at least 1C and a current value $X_{n+1}$ in charging pattern $P_{n+1}$ of 0 A, it is advantageous for the cell voltage during charging to exceed 3.0 V, and especially 4.2 V.

There will be times where, depending on the charging current value $X_n$ selected, the cell voltage rises to the vicinity of 10 V. However, in such cases, an excessive rise in the cell voltage can be prevented by subsequently placing $X_{n+1}$ in a rest state of 0 A.

Accordingly, not only is there little need to strictly control the rated full charging voltage so as not to exceed 4.2 V as in prior-art charging methods, energy-efficient charging can be carried out using a large current as the current value $X_n$, thus making it possible to shorten the time it takes to achieve a full charge.

Intermittent charging (charge → rest → charge) can also be preferably used.

The charging time $t_n$ in the above charging pattern $P_n$ is not subject to any particular limitation, although it is advantageous for the charging time to be not more than 10 seconds, preferably from 1.0 millisecond to 10 seconds, and most preferably from 1.0 millisecond to 1 second.

That is, in the present invention, it is preferable for the initial current during charging to be high so as to break up passivating layers on the electrode surfaces and elsewhere, and for charging to be subsequently carried out on the battery in which these passivating layers have been destroyed. This approach enables charging to be carried out at an even higher energy efficiency. In addition, removing the passivating layers activates the active materials, and can therefore improve the cycle life.

However, the cell voltage undergoes a large rise when the passivating layers are destroyed. If charging is then continued at the same current level, in addition to the passivating layers, destruction of the activate materials, electrodes and electrolyte may occur.

Moreover, when the charging time $t_n$ during passivating layer destruction is increased, the passivating layer-destroying effect diminishes over time, and so a longer charging time is unlikely to significantly increase the effects. At the same time, as noted above, increasing $t_n$ leads to an excessive rise in the cell voltage. Hence, it is preferable

for the charging time $t_n$ in each charging pattern $P_n$ to fall within the above-indicated range. At the very least, the charging time $t_n$ when charging is carried out at a charging current large enough to destroy the passivating layer is preferably set to 1 second or less.

A secondary battery can generally be used with repeated charging and discharging for anywhere from several hundred to about 500 cycles. In this case, the above-described charging method of the invention (referred to hereinafter as the "direct-current pattern charging method") may of course be used in each charging cycle, although this direct-current pattern charging method can also be used in combination with prior-art constant-current charging and/or constant-voltage charging.

When the respective charging methods are used in combination in this way, the manner in which they are combined is not subject to any particular limitation. The charging method used will typically be one in which the above-described direct-current pattern charging is carried at preset charge cycle intervals, such as a method which consists basically of constant-current and/or constant-voltage charging with direct-current pattern charging being carried out once every 50 cycles.

When direct-current pattern charging is carried out at using such a method of combination, the passivating layers that have formed on the electrode active materials can be destroyed and the active materials reactivated, thus enabling efficient charging to be achieved and making it possible to extend the cycle life of the cell.

It is also possible to combine the above direct-current pattern charging with constant-current charging and/or constant-voltage charging in a single charging cycle. For example, a method may be used which carries out direct-current pattern charging up to a given cell capacity, then switches to constant-current and/or constant-voltage charging. Moreover, such a method in which different charging methods are used in combination within a single cycle can be carried out at preset charge cycle intervals in the manner described above.

By using in particular a charging method which initially carries out the above-described direct-current pattern charging to break up the passivating layers that have formed on the electrode active materials and elsewhere, then switches to constant-current and/or constant-voltage charging, it is possible to increase the cycle life of the battery while enhancing the charging efficiency. Moreover, by making concurrent use of direct-current pattern charging which has a good charging efficiency, a full charge can be achieved in less time than is required when constant-current and/or constant-voltage charging is used alone.

The above-described direct-current pattern charging can be widely used as the charging method in nonaqueous electrolyte secondary batteries made up of a positive electrode and a negative electrode which are composed of a lithium-occluding and releasing material and a binder polymer, at least one separator for separating the positive and negative electrodes, and a lithium-containing nonaqueous electrolyte. However, it is especially suitable for use in the above-described first type of nonaqueous electrolyte secondary battery according to the invention.

That is, because such secondary batteries do not undergo an excessive rise in cell voltage even when charged above a full charge, unlike in the case of conventional secondary batteries, one does not need to be as concerned about the cell voltage climbing when the above-described direct-current pattern charging is carried out. Hence, charging can be carried out at a higher current value $X_n$ (in amps), enabling the energy efficiency of charging to be improved even further so that charging can be carried out at a higher speed than is possible in conventional secondary batteries, and also making it possible to achieve an even longer cycle life.

In these secondary batteries having excellent overcharging characteristics, the electrode-oxidizable substance which has been added to the electrolyte triggers cyclic redox reactions which consume electrical energy during overcharging, thereby preventing an excessive rise in the cell voltage.

However, the cyclic redox reactions that arise at the positive and negative electrodes may undergo a considerable decline in activity when passivating layers form on the electrodes and the electrode active materials.

For example, when a battery is allowed to stand for a given length of time in a nearly fully charged state, then is again subjected to charging and overcharging, sometimes the redox reactions will fail to proceed smoothly and the cell voltage will rise during overcharging.

The failure of the cyclic redox reactions to proceed smoothly is probably due to the presence of passivating layers. In this case as well, the above problems can be resolved by carrying out the direct-current pattern charging method of the invention,

That is, in cases where the above-described secondary battery having excellent overcharging characteristics is charged to a nearly fully charged state, such as a charge capacity of at least about 60% and a cell voltage of about 3.8 V or more, is subsequently allowed to stand for a given period of perhaps 15 to 30 hours and is then again subjected to charging, to enhance safety it is desirable, at least when charging is recommenced, for charging to be carried out by the above-described direct-current pattern charging method.

In the above-described nonaqueous electrolyte secondary batteries having excellent overcharging characteristics, it suffices for the electrode oxidation reaction to occur at a charge capacity which is at least 100% of the rated capacity. However, to ensure the rated capacity of the battery and to allow the electrode oxidation reaction to take place in such a way that the reversibility of the active materials are not compromised, it is preferable for the electrode

oxidation reaction to arise at a charge capacity of at least 150%.

As explained above, by carrying out a given direct-current pattern charging process in which consecutive charging patterns have different current values in accordance with the nonaqueous electrolyte secondary battery charging method of the invention, electrical energy is used efficiently in the chemical reactions, thus enhancing the energy utilization factor during charging. As a result, the charging efficiency can be increased and the time required for the battery to become fully charged can be shortened. Moreover, the passivating layers that have formed on the electrodes and electrode active materials are destroyed, making it possible to improve the coulombic efficiency of the battery and increase the associated charge/discharge cycle life.

## EXAMPLE

Synthesis examples, examples of the invention and comparative examples are given below to more fully illustrate the invention, and are not intended to limit the scope thereof.

### Synthesis Example 1

Preparation of Polyvinyl Alcohol Derivative

A reaction vessel equipped with a stirring element was charged with 3 parts by weight of polyvinyl alcohol (average degree of polymerization, 500; vinyl alcohol fraction, ≥98%), 20 parts by weight of 1,4-dioxane and 14 parts by weight of acrylonitrile. A solution of 0.16 part by weight of sodium hydroxide in 1 part by weight of water was gradually added under stirring, after which stirring was continued for 10 hours at 25°C.

The resulting mixture was neutralized with an ion-exchange resin (Amberlite IRC-76, produced by Organo Corporation). The ion-exchange resin was separated off by filtration, after which 50 parts by weight of acetone was added to the solution and the insoluble matter was filtered off. The resulting acetone solution was placed in dialysis membrane tubing and dialyzed with running water. The polymer which precipitated within the dialysis membrane tubing was collected and re-dissolved in acetone. The resulting solution was filtered, following which the acetone was evaporated off, giving a cyanoethylated polyvinyl alcohol derivative.

No hydroxyl group absorption was observed in the infrared absorption spectrum of this polymer derivative, confirming that all the hydroxyl groups were capped with cyanoethyl groups (capping ratio, 100%).

### Synthesis Example 2

Preparation of Thermoplastic Polyurethane Resin

A reactor equipped with a stirrer, a thermometer and a condenser was charged with 64.34 parts by weight of preheated and dehydrated polycaprolactone diol (Praccel 220N, produced by Daicel Chemical Industries, Ltd.) and 28.57 parts by weight of 4,4'-diphenylmethane diisocyanate. The reactor contents were stirred and mixed under a stream of nitrogen at 120°C for 2 hours, following which 7.09 parts by weight of 1,4-butanediol was added to the mixture and reaction was similarly effected under a stream of nitrogen at 120°C. When the reaction reached the point where the product became rubbery, it was stopped. The product was then removed from the reactor and heated at 100°C for 12 hours. Once the isocyanate group absorption peak was confirmed to have disappeared from the infrared absorption spectrum, heating was stopped, yielding a solid polyurethane resin.

The resulting polyurethane resin had a weight-average molecular weight (Mw) of $1.71 \times 10^5$. Eight parts by weight of this polyurethane resin was dissolved in 92 parts by weight of N-methyl-2-pyrrolidone to form a polyurethane resin solution.

[Nonaqueous Electrolyte Secondary Battery (1)]

### Example 1

Production of Positive Electrode:

$LiCoO_2$ (made by Seido Chemical Industry Co., Ltd.) as the positive electrode active material, Ketjenblack EC (made by Lion Corporation) as the conductive material, polyvinylidene fluoride (PVDF1300, made by Kureha Chemical Industry Co., Ltd.) and the polyurethane (PU) prepared in Synthesis Example 2 were mixed in a weight ratio of 100.0:4.35:4.13:2.72, respectively, then dissolved or dispersed and mixed in N-methyl-2-pyrrolidone (NMP; 56.74 parts by weight per 100 parts by weight of $LiCoO_2$; produced by Wako Pure Chemical Industries, Ltd.) to form a slurry.

The slurry was applied onto an aluminum sheet (thickness, 0.020 mm; made by Nippon Foil Manufacturing Co., Ltd.), then dried, rolled, and cut to dimensions of 50.0 mm (width of coated area, 40.0 mm)×20.0 mm and 50.0×270.0 mm to give positive electrodes.
Electrodes having a weight of 0.0280 g and a thickness of 0.080 mm were selected and used.

Production of Negative Electrode:

Mesophase microbeads (made by Osaka Gas Chemicals Co., Ltd.) as the negative electrode active material and polyvinylidene fluoride (PVDF9100, made by Kureha Chemical Industry Co., Ltd.) were mixed in a weight ratio of 100.0:8.70, respectively, then dissolved or dispersed and mixed in NMP (121.7 parts by weight per 100 parts by weight of mesophase microbeads) to form a slurry.
The slurry was applied onto copper foil (thickness, 0.010 mm; made by Nippon Foil Manufacturing Co., Ltd.), then dried, rolled, and cut to dimensions of 50.0 mm (width of coated area, 40.0 mm)×20.0 mm and 50.0×270.0 mm to give negative electrodes.

Production of Electrode Group:

An electrode group was formed by combining two of the above positive electrodes and two of the above negative electrodes with two intervening cellulose separators (TF40-35, made by Nippon Kodoshi Corporation; thickness, 0.035 mm) cut to dimensions of 54.0×22.0 mm.

Preparation of Electrolyte Solution:

A 1.0 M solution of $LiPF_6$ was prepared by dissolving $LiPF_6$ (produced by Kishida Chemical Co., Ltd.; 1.0 M solution in ethylene carbonate/diethyl carbonate = 1/1) in a mixed solvent of ethylene carbonate (EC), diethyl carbonate (DEC), propylene carbonate (PC) and vinylene carbonate (VC) having a weight ratio of 100.0:115.9:26.15:2.479, respectively.
To this solution were added the following ingredients (values indicated are the number of parts by weight of each ingredient per 100 parts by weight of the ethylene carbonate in the solution): the cyanoethylated polyvinyl alcohol derivative prepared in Synthesis Example 1 (0.1076), the NK esters (all made by Shin-Nakamura Chemical Co., Ltd.) M-20G (monomethacrylate, 9.358), 9G (dimethacrylate, 13.09) and TMPT (trimethacrylate, 1.100), and 2,2'-azobis (2,4-dimethylvaleronitrile) (made by Wako Pure Chemical Industries, Ltd.; 1.778). The above constituents were stirred and mixed to form a nonaqueous electrolyte solution.

Battery Production:

The above electrolyte solution was poured into the electrode group fabricated as described above in a volume equivalent to the volume of space in the electrode group (100.0 vol%). The electrolyte-filled electrode group was then laminate-packed under a vacuum of about 76 torr to give a secondary battery.

Example 2

Aside from adding 1.00 part by weight of the PVA prepared in Synthesis Example 1 to 100 parts by weight of ethylene carbonate to form a solution (referred to hereinafter as "solution A"), mixing this solution A with the NK ester M-20G in a weight ratio of 100:1, and using the resulting mixture as the electrolyte solution, a secondary battery was produced in the same way as in Example 1.

Example 3

Aside from using a mixture of solution A from Example 2 with NK ester 9G in a weight ratio of 100:1 as the electrolyte solution, a secondary battery was produced in the same way as in Example 1.

Comparative Example 1

Aside from using solution A from Example 2 directly as the electrolyte solution, a secondary battery was produced in the same way as in Example 1.
In each of the secondary batteries produced in the above examples of the invention and the comparative example, the cell capacity was defined as the electrical capacity of the positive electrode active material calculated

from a theoretical capacity of 137 mAh/g when x = 0.5 in the Faraday reaction

$$LiCoO_2 \rightarrow Li_xCoO_2 + (1\text{-}x)Li^+ + (1\text{-}x)e^-$$

at the positive electrode active material of the battery, and corresponded to a charge capacity of 100.0% (about 36.0 mAh).

The secondary battery was initially charged to 1.50 V at a current of 0.01C, then charged to 3.20 V at a current of 0.05C.

Only the secondary battery produced in Example 1 was subsequently aged at 55°C for 2 hours, then at 80°C for 30 minutes to induce electrolyte gelation.

In each example, the battery was then subjected to three charge/discharge cycles, each cycle consisting of constant-current/constant-voltage charging to a voltage setting of 4.20 V and a current cut-off of 0.10C, one hour at rest, constant-current discharging at 1.00C to a cut-off voltage of 3.0 V, and one hour at rest. This was followed by constant-current discharge at 0.20C to 2.75 V, thus placing the sample battery in an initial state (state of charge (SOC) = 0%).

The batteries were then constant-current charged at a current of 1.0C, and their voltage and surface temperature behaviors were examined. The results are shown in FIG. 3.

As shown in FIG. 3, the secondary battery obtained in Comparative Example 1 experienced rapid rises in both voltage and surface temperature after passing a charge capacity of about 170%. By contrast, the batteries obtained in Examples 1 to 3 according to the invention maintained steady cell voltages and surface temperatures at charge capacity ≥ 100%, thus demonstrating a stabilizing effect in the overcharging region.

[Module (Power Supply)]

<u>Example 4</u>

A module was produced by connecting in series three of the secondary cells produced in Example 1.

This module was charged to charge capacity = 250% at a current of 1.0C, and both the module voltage as well as the voltage behavior of each cell were examined during overcharging. The results are given in FIG. 4.

As shown in FIG. 4, once the module voltage had reached a level of about 13.8 V at a charge capacity close to 100%, the module voltage remained at the same level and the individual cell voltages remained at a level of 4.3 to 4.8 V as charging continued. Hence, an overcharge region stabilizing effect was observable in the module as well.

<u>Example 5</u>

A module was produced by connecting in series three of the secondary cells produced in Working Example 3.

This module was charged to charge capacity = 250% at a current rate of 1.0C, and both the module voltage as well as the voltage behavior of each cell were examined during overcharging. The results are given in FIG. 5.

As shown in FIG. 5, once the module voltage had reached a level of about 14.3 V at a charge capacity close to 100%, the module voltage remained at the same level and the individual cell voltages remained at a level of 4.8 to 5.0 V as charging continued. Hence, an overcharge region stabilizing effect was observable in the module as well.

[Nonaqueous Electrolyte Secondary Battery (2)]

<u>Example 6</u>

Preparation of Electrolyte Solution:

An organic mixed solvent was prepared by mixing diethyl carbonate (DEC), ethylene carbonate (EC), propylene carbonate (PC) and vinylene carbonate (VC) in a weight ratio of 50:35:13:2. $LiPF_6$ was dissolved therein to a concentration of 1M to form a nonaqueous electrolyte solution.

Preparation of Electrolyte Composition:

The following dehydration-treated components were mixed in the indicated amounts: 100 parts by weight of polyethylene glycol dimethacrylate (the NK ester 9G made by Shin-Nakamura Chemical Co., Ltd.; number of oxirene units, 9), 70.15 parts by weight of methoxypolyethylene glycol monomethacrylate (the NK ester M-20G made by

Shin-Nakamura Chemical Co., Ltd.; number of oxirene units, 2), and 8.41 parts by weight of trimethylolpropane trimethacrylate (the NK ester TMPT made by Shin-Nakamura Chemical Co., Ltd.). Next, 0.5 part by weight of the polyvinyl alcohol derivative obtained in Synthesis Example 1 was added to 100 parts of the above mixture, yielding a pregel composition.

Seven parts by weight of the resulting pregel composition was mixed with 93 parts by weight of the above-described nonaqueous electrolyte solution. Azobis(2,4-dimethylvaleronitrile) (0.5 part by weight) was added to the resulting mixture, giving an electrolyte composition.

Production of Positive Electrode:

Ninety-two parts by weight of $LiCoO_2$ (made by Seido Chemical Industry Co., Ltd.) as the positive electrode active material, 4 parts by weight of Ketjenblack EC (made by Lion Corporation) as the conductive material, 2.5 parts by weight of the polyurethane resin solution prepared in Synthesis Example 2, and 10 parts by weight of polyvinylidene fluoride (PVdF1300, made by Kureha Chemical Industry Co., Ltd.) were dissolved in 90 parts by weight of N-methyl-2-pyrrolidone. Next, 38 parts by weight of the resulting solution and 18 parts by weight of N-methyl-2-pyrrolidone were stirred and mixed together, giving a paste-like positive electrode binder composition. The positive electrode binder composition was applied onto aluminum foil with a doctor blade to a film thickness when dry of 100 μm. This was followed by 2 hours of drying at 80°C, then roll pressing to a thickness of 80 μm, thereby giving a positive electrode.

Production of Negative Electrode:

Ninety-two parts by weight of mesophase microbeads (MCMB6-28, made by Osaka Gas Chemicals Co., Ltd.) as the negative electrode active material and 10 parts by weight of polyvinylidene fluoride (PVdF9100, made by Kureha Chemical Industry Co., Ltd.) were dissolved in 90 parts by weight of N-methyl-2-pyrrolidone. Next, 80 parts by weight of the resulting solution and 40 parts by weight of N-methyl-2-pyrrolidone were stirred and mixed together, giving a paste-like negative electrode binder composition. The negative electrode binder composition was applied onto copper foil with a doctor blade to a film thickness when dry of 100 μm. This was followed by 2 hours of drying at 80°C, then roll pressing to a thickness of 80 μm, thereby giving a negative electrode.

Battery Production:

The positive and negative electrodes fabricated as described above were respectively cut so that the size of the positive electrode active material layer-coated portion of the positive electrode was 5x48 cm, and the size of the negative electrode active material layer-coated portion of the negative electrode was 5.2x48.2 cm. This was done in such a way as to provide the positive electrode with an area not coated with the positive electrode active material, and to provide the negative electrode with an area not coated with the negative electrode active material.

Next, an aluminum terminal lead was resistance-welded to the uncoated portion of the positive electrode and a nickel terminal lead was resistance-welded to the uncoated portion of the negative electrode. The positive and negative electrodes to which terminal leads had been attached were then vacuum dried at 140°C for 12 hours. The dried positive and negative electrodes were stacked together with an intervening cellulose separator having a thickness of 30 μm and a porosity of 72.4% (TF40-30, made by Nippon Kodoshi Corporation), and the resulting laminate was coiled to form a flattened electrode body.

The electrode body was placed in an aluminum laminate case with the positive electrode and negative electrode terminal leads emerging from the positive and negative electrodes, and the terminal areas were heat-sealed. The electrolyte composition prepared as described above was poured into the resulting cell assembly and impregnated therein under a vacuum, following which the aluminum laminate case was heat-sealed. The battery was subsequently heated at 55°C for 2 hours and at 80°C for 0.5 hour to effect gelation, thereby giving a nonaqueous electrolyte secondary battery.

Comparative Example 2

Battery Production:

A flattened electrode body was produced as in Example 6. The electrode body was placed in an aluminum laminate case with the positive electrode and negative electrode terminal leads emerging from the positive and negative electrodes, and the terminal areas were heat-sealed. The nonaqueous electrolyte solution prepared in Example 1 was poured into the resulting cell assembly and impregnated therein under a vacuum, following which the aluminum laminate case was heat-sealed, giving a nonaqueous electrolyte secondary battery.

Comparative Example 3

Battery Production:

A positive electrode and a negative electrode produced in the same way as in Example 6 were dried at 140°C for 12 hours, then stacked together with an intervening polyolefin separator having a PP/PE/PP three-layer construction. The resulting laminate was coiled to form a flattened electrode body.

Next, the electrode body was placed in an aluminum laminate case with the positive electrode and negative electrode terminal leads emerging from the positive and negative electrodes, and the terminal areas were heat-sealed. The electrolyte composition prepared in Example 6 was poured into the resulting cell assembly and impregnated therein under a vacuum, following which the aluminum laminate case was heat-sealed. The battery was subsequently heated at 55°C for 2 hours and at 80°C for 0.5 hour to effect gelation, thereby giving a nonaqueous electrolyte secondary battery.

The nonaqueous electrolyte secondary batteries obtained in Example 6 and Comparative Examples 2 and 3 were measured and tested as described below. The results are given in Tables 1 and 2.

[1] Measurement of Battery Capacity and Energy Density:

The nonaqueous electrolyte secondary batteries obtained in Example 6 and Comparative Examples 2 and 3 were constant-current charged at 25°C and 120 mA (0.5 mA/$cm^2$; corresponds to 0.2C) to 4.2 V, and subsequently constant-voltage charged for 2 hours. The batteries were then left at rest for 5 minutes, after which they were discharged to a cut-off voltage of 2.7 V at a constant current of 120 mA, and the discharge capacity and energy density were measured.

[2] Discharge Load Characteristics Test:

The nonaqueous electrolyte secondary batteries obtained in Example 6 and Comparative Examples 2 and 3 were constant-current charged at 25°C and 120 mA (0.5 mA/$cm^2$; corresponds to 0.2C) to 4.2 V, and subsequently constant-voltage charged for 2 hours. The batteries were then left at rest for 5 minutes, after which they were discharged to a cut-off voltage of 2.7 V at a constant current of 600 mA (2.5 mA/$cm^2$; corresponds to 1C), and the ratio of discharge at 600 mA (1C) with respect to discharge at 120 mA (0.2C) was computed as a percentage.

[3] Overcharge Characteristics Tests:

[3-1] Overcharge Tests

(1) The secondary battery obtained in Example 6 was subjected to an overcharge test at 25°C and a constant current of 600 mA (2.5 mA/$cm^2$; corresponds to 1C) for up to 2.5 hours. During the 2.5-hour test (charge capacity, 250%), the secondary battery in Example 6 had a maximum cell voltage of 4.72 V and a maximum surface temperature of 49.3°C.

(2) The secondary battery obtained in Example 6 was subjected to an overcharge test at 25°C and a constant current of 1,800 mA (7.5 mA/$cm^2$; corresponds to 3C) for up to 50 minutes. During the 50-minute test (charge capacity, 250%), the secondary battery in Example 6 had a maximum cell voltage of 4.95 V and a maximum surface temperature of 52.8°C.

(3) The secondary battery obtained in Example 6 was subjected to an overcharge test at 25°C and a constant current of 600 mA (2.5 mA/$cm^2$; corresponds to 1C) for up to 3.5 hours. During the 3.5-hour test (charge capacity, 350%), the secondary battery in Example 6 had a maximum cell voltage of 4.98 V and a maximum surface temperature of 51.1°C.

(4) The secondary battery obtained in Comparative Example 2 was subjected to an overcharge test at 25°C and a constant current of 600 mA (2.5 mA/$cm^2$; corresponds to 1C) for up to 2.5 hours. When 2.1 hours had elapsed (charge capacity, 210%) following the start of the test, the cell voltage exceeded 10V, the surface temperature exceeded 100°C, and the battery ruptured and ignited.

(5) The secondary battery obtained in Comparative Example 3 was subjected to an overcharge test at 25°C and a constant current of 600 mA (2.5 mA/$cm^2$; corresponds to 1C) for up to 2.5 hours. When 2.3 hours had elapsed (charge capacity, 230%) following the start of the test, the cell voltage exceeded 10V, the surface temperature exceeded 100°C, and the battery ruptured and ignited.

[3-2] Discharge Test after Overcharging:

The nonaqueous electrolyte secondary battery obtained in Comparative Example 6 was overcharged at a constant current of 600 mA (2.5 mA/$cm^2$; corresponds to 1C). Following the end of overcharging, the battery was discharged to a voltage cut-off of 2.7 V at a constant current of 120 mA (0.5 mA/$cm^2$; corresponds to 0.2C). The discharge capacity at this time was 487 mAh. The ratio of the discharge capacity, when the battery was discharged at 120 mA (0.2C) after overcharging, to the cell capacity was 80.4%.

Table 1

| | Separator | Electrolyte | Cell capacity (mAh) | Energy density (Wh/L) | Discharge load characteristics (%) |
|---|---|---|---|---|---|
| Example 6 | cellulose | polymer gel | 605 | 315 | 98.8 |
| Comparative Example 2 | cellulose | nonaqueous electrolyte solution | 608 | 323 | 99.3 |
| Comparative Example 3 | polyolefin | polymer gel | 541 | 274 | 68.4 |

Table 2

| | Overcharge tests | | | | | |
|---|---|---|---|---|---|---|
| | Charging current (mA) | charge capacity (%) | Cell voltage (V) | Surface temp. (°C) | Discharge capacity after overcharging (mAh) | (Discharge capacity after overcharging) / (cell capacity) × 100 |
| Example 6 | 600 (1C) | 250 | 4.72 | 49.3 | 487 | 80.4 |
| | 1,800 (3C) | 250 | 4.95 | 52.8 | - | - |
| | 600 (1C) | 350 | 4.98 | 51.1 | - | - |
| Comparative Example 2 | 600 | 210 | >10 | >100 | - | - |
| Comparative Example 3 | 600 | 230 | >10 | >100 | - | - |

[Nonaqueous Electrolyte Secondary Battery Charging Method]

[1] Direct-Current Pattern Charging

Example 7

Production of Positive Electrode:

$LiCoO_2$ (made by Seido Chemical Industry Co., Ltd.) as the positive electrode active material, Ketjenblack EC (made by Lion Corporation) as the conductive material, polyvinylidene fluoride (PVDF1300, made by Kureha Chemical Industry Co., Ltd.) and the polyurethane resin solution (PU) prepared in Synthesis Example 2 were mixed in a weight ratio of 100.0:4.35:4.13:2.72, respectively, then dissolved or dispersed and mixed in N-methyl-2-pyrrolidone (NMP; 56.74 parts by weight per 100 parts by weight of $LiCoO_2$; produced by Wako Pure Chemical Industries, Ltd.) to form a slurry.

The slurry was applied onto an aluminum sheet (thickness, 0.020 mm; made by Nippon Foil Manufacturing Co., Ltd.), then dried, rolled, and cut to dimensions of 50.0 mm (width of coated area, 40.0 mm)×20.0 mm and 50.0×270.0 mm to give positive electrodes. Electrodes having a weight of 0.280 g and a thickness of 0.080 mm were

selected and used.

Production of Negative Electrode:

Mesophase microbeads (made by Osaka Gas Chemicals Co., Ltd.) as the negative electrode active material and polyvinylidene fluoride (PVdF9100, made by Kureha Chemical Industry Co., Ltd.) were mixed in a weight ratio of 100.0:8.70, respectively, then dissolved or dispersed and mixed in NMP (121.7 parts by weight per 100 parts by weight of mesophase microbeads) to form a slurry.

The slurry was applied onto copper foil (thickness, 0.010 mm; made by Nippon Foil Manufacturing Co., Ltd.), then dried, rolled, and cut to dimensions of 50.0 mm (width of coated area, 40.0 mm)x20.0 mm to give negative electrodes.

Production of Electrode Group:

An electrode group was formed by combining two of the above positive electrodes and two of the above negative electrodes with two intervening cellulose separators (TF40-35, made by Nippon Kodoshi Corporation; thickness, 0.035 mm) cut to dimensions of 54.0x22.0 mm.

Preparation of Electrolyte Solution:

A 1.0 M solution of $LiPF_6$ was prepared by dissolving $LiPF_6$ (produced by Kishida Chemical Co., Ltd.; 1.0 M solution in ethylene carbonate/diethyl carbonate = 1/1) in a mixed solvent of ethylene carbonate (EC), diethylene carbonate (DEC), propylene carbonate (PC) and vinylene carbonate (VC) having a weight ratio of 100.0:157.1:28.57: 2.857, respectively.

To this solution were added the following ingredients (values indicated are the number of parts by weight of each ingredient per 100 parts by weight of the ethylene carbonate in the solution): the polyvinyl alcohol derivative prepared in Synthesis Example 2 (1.00), the NK esters (all made by Shin-Nakamura Chemical Co., Ltd.) M-20G (monomethacrylate, 9.358), 9G (dimethacrylate, 13.09) and TMPT (trimethacrylate, 1.100), and 2,2'-azobis(2,4-dimethylvaleronitrile) (made by Wako Pure Chemical Industries, Ltd.; 1.778). The above constituents were stirred and mixed to form a nonaqueous electrolyte solution.

Battery Production:

The above electrolyte solution was poured into the electrode group fabricated as described above in a volume equivalent to the volume of the above-described electrode group (100.0 vol%), as calculated from its diameter and length. The electrolyte-filled electrode group was then laminate-packed under a vacuum of about 76 torr to give a nonaqueous electrolyte secondary battery.

In this secondary battery, the cell capacity was defined as the electrical capacity of the positive electrode active material calculated from a theoretical capacity of 137 mAh/g when x = 0.5 in the Faraday reaction

$$LiCoO_2 \rightarrow Li_xCoO_2 + (1\text{-}x)Li^+ + (1\text{-}x)e^-$$

at the positive electrode active material of the battery, and corresponded to a charge capacity of 100.0% (about 36.0 mAh).

The secondary battery was initially charged to 1.50 V at a current of 0.01C, then charged to 3.20 V at a current of 0.05C. Next, the battery was aged at 55°C for 2 hours, then at 80°C for 30 minutes to induce electrolyte gelation.

The battery was then subjected to three charge/discharge cycles, each of which consisted of constant-current/ constant-voltage charging to a voltage setting of 4.20 V and a current cut-off of 0.10C, one hour at rest, constant-current discharging at 1.00C to a voltage cut-off of 3.0 V, and one hour at rest. This was followed by constant-current discharge at 0.20C to 2.75 V, thus placing the sample battery in an initial state (SOC = 0%).

The battery was subjected to charging in the pattern shown below from a 0% charge capacity to respective charge capacity of 20, 50, 80 and 100%.

Charging was carried out in $P_1$[0.036 A (1C), 1 s] → $P_2$[0 A, 5 s] cycles.

Example 8

The battery produced in Example 7 was subjected to charging in the pattern shown below from a 0% charge

capacity to respective charge capacity of 20, 50, 80 and 100%.

Charging was carried out in $P_1$[0.108 A (3C), 1 s] → $P_2$[0 A, 5 s) cycles.

Example 9

The battery produced in Example 7 was subjected to charging in the pattern shown below from a 0% charge capacity to respective charge capacity of 20, 50, 80 and 100%.

Charging was carried out in $P_1$[0.36 A (10C), 1 s] → $P_2$[0 A, 5 s) cycles.

Comparative Example 4

The battery produced in Example 7 was subjected to continuous constant-current charging at 0.036 A from a 0% charge capacity to respective charge capacity of 20, 50, 80 and 100%.

Comparative Example 5

The battery produced in Example 7 was subjected to continuous constant-current charging at 0.108 A from a 0% charge capacity to respective charge capacity of 20, 50, 80 and 100%.

Comparative Example 6

The battery produced in Example 7 was subjected to continuous constant-current charging at 0.36 A from a 0% charge capacity to respective charge capacity of 20, 50, 80 and 100%.

After being charged as described above, the nonaqueous electrolyte secondary batteries in above Examples 7 to 9 according to the invention and Comparative Examples 4 to 6 were then placed at rest for a period of 1 hour, following which they were discharged at a current of 0.2C to 2.75 V. FIG. 6 is a plot of the charge capacity versus the amount of electricity discharged (discharge capacity) for the batteries in each example.

FIG. 6 shows that, in the examples according to the invention, as the charge rate becomes larger (to 3.0C and 10.0C), the electrical energy is correspondingly consumed in the discharge reaction.

[2] Overcharge Tests Using Direct-Current Pattern Charging

Example 10

The secondary battery obtained in Example 7 was charged from the initial state at a rate of 0.2C for 5 hours. The resulting state was defined as a charge capacity of 100%. The battery was then discharged for 16±4 hours in an open circuit state. The resulting discharged state is referred to below as "State 1."

From State 1, the battery was subjected to 150% of overcharging, based on the rated capacity, in $P_1$[0.036 A (1C) 1 s] → $P_2$[0 A, 5 s] cycles to a total charge capacity of 250%. This was followed by 250% of continuous charging, based on the rated capacity, at a constant current of 0.036 A to a total charge capacity of 500%.

Example 11

From State 1 in Example 10, the battery was subjected to 150% of overcharging, based on the rated capacity, in $P_1$[0.036 A (10C), 1 s] → $P_2$[0 A, 5 s] → $P_3$[0.036 A (1C), 1 s] → $P_4$[0 A, 5 s] cycles to a total charge capacity of 250%. This was followed by 250% of continuous charging, based on the rated capacity, at a constant current of 0.036 A to a total charge capacity of 500%.

Comparative Example 7

From State 1 in Example 10, the battery was subjected to continuous charging at a constant current of 0.036 A to a total charge capacity of 500%.

The change in voltage was measured in each of the secondary batteries in which overcharging was carried out in above Examples 10 and 11 according to the invention and in Comparative Example 7. The results are shown in FIGS. 7 to 11.

As shown in FIG. 11, when charging was carried out at a constant current in Comparative Example 7, the cell voltage continued to climb as charging proceeded. At a charge capacity of close to 500%, the voltage exceeded 6.0 V and battery rupture occurred.

On the other hand, when overcharging was carried out by the charging methods of Examples 10 and 11 according to the invention, as shown in FIGS. 7 to 10, a high voltage value occurred only during that portion of the cycle in Example 11 when the current passing through was 10.0C; undesirable conditions such as battery swell did not arise up to a charge capacity of 250%. Moreover, even when continuous constant-current charging was carried out at 1.0C, the voltage did not rise as in Comparative Example 7, nor did undesirable conditions such as battery swell occur.

[3] Cycle Life of Nonaqueous Electrolyte Secondary Battery

Examples 12 to 14

The secondary battery obtained in Example 7 was subjected to 500 charge/discharge cycles, each cycle consisting of the following charge/discharge pattern: constant-current/constant-voltage charging at 25°C and a current of 1.0C (0.036 A) to a voltage setting of 4.2 V and a current cut-off of 0.05C, one minute of rest, then constant-current discharge at 1.0C to a voltage cut-off of 2.7 V, followed by another minute of rest. In Example 12, every 100 cycles a full charging method was carried out in which $P_1$[0.108 A (3C), 1 s] → $P_2$[0 A, 5 s] pattern charging was repeated 10 times, followed by constant-current/constant-voltage charging at 0.05C.
In Example 13, every 100 cycles a full charging method was carried out in which $P_1$[0.108 A (3C), 0.1 s] → $P_2$[0 A, 1 s] pattern charging was repeated 100 times, followed by constant-current/constant-voltage charging at 0.05C.
In Example 14, every 100 cycles a full charging method was carried out in which $P_1$[0.36 A (10C), 0.1 s] → $P_2$[0 A, 1 s] pattern charging was repeated 33 times, followed by constant-current/constant-voltage charging at 0.05C.

Comparative Example 8

The secondary battery obtained in Example 7 was subjected to 500 charge/discharge cycles, each cycle consisting of the following charge/discharge pattern: constant-current/constant-voltage charging at 25°C and a current of 1.0C (0.036 A) to a voltage setting of 4.2 V and a current cut-off of 0.05C, one minute of rest, then constant-current discharge at 1.0C to a voltage cut-off of 2.7 V, followed by another minute of rest.
In Examples 12 to 14 according to the invention and Comparative Example 8, the percent retention of the discharge capacity after specific numbers of cycles was calculated based on a value of 100% for the discharge capacity in the first cycle. The results are shown in FIG. 12.
As shown in FIG. 12, the percent retention by the secondary battery in Comparative Example 8 fell to 70% after 500 cycles. By contrast, the percent retention was 72.5% in Example 12, 75% in Example 13 and 80% in Example 14, indicating that the cycle life can be increased by using a direct-current pattern charging method to carry out charging.

[4] Nonaqueous Electrolyte Secondary Battery Charging Time

Example 15

The secondary battery fabricated in Example 7 according to the invention was charged using the pattern indicated below from a charge capacity of 0% to charge capacity of 20, 50, 80 and 100% relative to the rated capacity (36.0 mAh), following which it was left at rest for one hour, then constant-current discharged at 0.2C (7.2 mA) to 2.75 V.
Pattern charging was carried out in $P_1$[360.0 mA (10C), 100 ms] → $P_2$[0 A, 500 ms] cycles.

Example 16

The secondary battery fabricated in Example 7 was charged using the pattern indicated below from a charge capacity of 0% to charge capacity of about 50, about 80 and 100% relative to the rated capacity (36.0 mAh), following which it was left at rest for one hour, then constant-current discharged at 0.2C (7.2 mA) to 2.75 V.
Pattern charging was carried out in $P_1$[1,108 mA (30.08C), 63.6 ms] → $P_2$[0 A, 177.4 ms] cycles.

Comparative Example 9

The secondary battery fabricated in Example 7 was subjected to continuous constant-current charging from a charge capacity of 0% to charge capacity of 20, 50, 80 and 100% relative to the rated capacity at a current of 1.0C (36.0 mAh), following which it was left at rest for one hour, then constant-current discharged at 0.2C (7.2 mA) to 2.75 V.

Comparative Example 10

The secondary battery fabricated in Example 7 was subjected to continuous constant-current charging from a charge capacity of 0% to charge capacity of 20, 50, 80 and 100% relative to the rated capacity at a current of 3.0C (108.0 mA), following which it was left at rest for one hour, then constant-current discharged at 0.2C (7.2 mA) to 2.75 V.

Comparative Example 11

The secondary battery fabricated in Example 7 was subjected to continuous constant-current charging from a charge capacity of 0% to charge capacity of 20, 50, 80 and 100% relative to the rated capacity at a current of 10.0C (360.0 mA), following which it was left at rest for one hour, then constant-current discharged at 0.2C (7.2 mA) to 2.75 V.

FIGS. 13 and 14 show respectively the charging patterns and charging time versus discharge capacity plots for the charging methods used above in Examples 15 and 16 according to the invention and in Comparative Examples 9 to 11.

As shown in FIG. 14, when continuous charging was carried out at a constant current, it took about 48 minutes at a current of 1.0C (Comparative Example 9) and about 18 minutes at a current of 3.0C (Comparative Example 10) to achieve 80% of the rated capacity. At a current of 10.0C (Comparative Example 11), only about 20% of the rated capacity was achieved. This is because energy was consumed in side reactions other than the charging reaction. Most of the side reactions were accompanied by the evolution of gases.

By contrast, when direct-current pattern charging was carried out in Example 15 according to the invention, even though the battery was charged at a current of 10.0C, the coulombic efficiency rose, making it possible to reach about 90% of the rated capacity. The time required to reach 80% of the rated capacity was about 33 minutes.

In Example 16, direct-current pattern charging was carried out at a high current of 30C, further increasing charging efficiency and shortening the time required to reach 80% of the rated capacity to about 14 minutes.

As described above, the present invention provides nonaqueous electrolyte secondary batteries and power supplies having excellent overcharging characteristics and safety. Moreover, because the nonaqueous electrolyte secondary batteries of this invention have excellent overcharge characteristics, when an intermittent or pulsed charging method is used, charging can be carried out at a higher current, enabling a good charging efficiency to be achieved. The inventive batteries can thus be charged at a higher speed than conventional secondary batteries, making them well-suited for use in electrical equipment that requires high-speed charging.

Furthermore, the charging method of the invention can improve the charging efficiency and shorten the time required to reach a full charge. In addition, the inventive charging method is able to destroy passivating layers that have formed on the electrodes and elsewhere, thus improving efficiency and increasing the charge/discharge cycle life.

## Claims

1. A nonaqueous electrolyte secondary battery comprising a positive electrode and a negative electrode which are composed of a lithium ion-occluding and releasing material and a binder polymer, at least one separator for separating the positive and negative electrodes, and a nonaqueous electrolyte which is composed of a lithium salt and an organic solvent;

   the battery being **characterized in that** the electrolyte includes also a substance that undergoes oxidation at the positive electrode in a cell voltage range of 4.1 V to 5.2 V, which substance provokes at the positive electrode an oxidation reaction that differs from the lithium-releasing reaction.

2. A nonaqueous electrolyte secondary battery comprising a positive electrode and a negative electrode which are composed of a lithium ion-occluding and releasing material and a binder polymer, at least one separator for separating the positive and negative electrodes, and a nonaqueous electrolyte which is composed of a lithium salt and an organic solvent;

   the battery being **characterized in that** the electrolyte includes also a substance that undergoes electrode oxidation at the positive electrode in a cell voltage range of 4.1 V to 5.2 V, which substance provokes at the positive electrode an oxidation reaction that differs from the lithium-releasing reaction and enables a reduction reaction that differs from the lithium-occluding reaction to occur at the negative electrode.

3. The nonaqueous electrolyte secondary battery of claim 1 or 2 which is **characterized in that** said electrode oxidation generates oxygen and/or carbon dioxide, and the oxygen and/or carbon dioxide oxidize a small amount of lithium metal which forms at the negative electrode to $Li_2O$ and/or $Li_2CO_3$.

4. The nonaqueous electrolyte secondary battery of claim 3 which is **characterized in that** the $Li_2O$ and/or $Li_2CO_3$ are reduced to metallic lithium and/or lithium ions at the negative electrode.

5. The nonaqueous electrolyte secondary battery of any one of claims 1 to 4 which is **characterized by**, when charging is carried out at 25°C and a current of up to 10.00C based on the theoretical capacity of the positive electrode, being free of positive electrode and negative electrode deterioration up to a charge capacity L defined as follows:

$$\text{charge capacity L (\%)} = 5 \times (\text{charging current C})^{-0.5} \times 100.$$

6. The nonaqueous electrolyte secondary battery of any one of claims 1 to 5 which is **characterized in that** electrode oxidation occurs in a voltage range of 1.40 to 1.60 V with respect to an $AlO_x$ reference electrode.

7. The nonaqueous electrolyte secondary battery according to any one of claims 1 to 6 which is **characterized in that** the organic solvent is one or more selected from among ethylene carbonate, propylene carbonate, vinylene carbonate and diethyl carbonate;
   wherein electrode oxidation occurs in a voltage range of 1.05 to 1.61 V, with respect to a standard hydrogen electrode (SHE), in the organic solvent and under normal temperature and standard atmospheric pressure conditions of 298.15 K and 101.325 Pa.

8. The nonaqueous electrolyte secondary battery of any one of claims 1 to 7 which is **characterized in that** the substance which is oxidized at the positive electrode is one or more selected from among compounds of the general formulas

R-CO-R, R-CO-OR, R-CO-NR'R, RO-CO-X-CO-OR and RR'N-CO-NR'R;

wherein each R is independently a substituted or unsubstituted monovalent hydrocarbon group, each R' is independently a hydrogen atom or a substituted or unsubstituted monovalent hydrocarbon group, and X is a divalent organic group.

9. The nonaqueous electrolyte secondary battery of any one of claims 1 to 8 which is **characterized in that** the nonaqueous electrolyte is a polymer gel electrolyte.

10. The nonaqueous electrolyte secondary battery of claim 9 which is **characterized in that** the polymer gel electrolyte is obtained by gelating an electrolyte composition composed primarily of a compound having a reactive double bond on the molecule, an organic solvent and a lithium salt.

11. The nonaqueous electrolyte secondary battery of any one of claims 1 to 10 which is **characterized in that** the separator has a porosity of at least 40%.

12. The nonaqueous electrolyte secondary battery of claim 11 which is **characterized in that** the separator is composed of at least one material selected from among cellulose, polypropylene, polyethylene and polyester, and has a porosity of at least 60%.

13. The nonaqueous electrolyte secondary battery of any one of claims 1 to 12 which is **characterized in that** the binder polymer in the positive electrode and/or negative electrode is composed of a thermoplastic polyurethane resin having a swelling ratio, as determined by the formula

$$\text{Swelling ratio (\%)} = \frac{\text{Weight in grams of swollen thermoplastic resin after 24 hours immersion in electrolyte solution at 20°C (g)}}{\text{Weight in grams of thermoplastic resin before immersion in electrolyte solution at 20°C (g)}} \times 100,$$

in a range of 150 to 800%.

**14.** A nonaqueous electrolyte secondary battery comprising a positive electrode, a negative electrode, a separator disposed between the positive and negative electrodes, and a polymer gel electrolyte;

which battery is **characterized in that** the separator is a porous film or porous sheet composed primarily of cellulose.

**15.** The nonaqueous electrolyte secondary battery of claim 14 which is **characterized in that** the separator has a thickness of 20 to 50 μm and a porosity of 65 to 85%.

**16.** The nonaqueous electrolyte secondary battery of claim 14 or 15 which is **characterized in that** the polymer gel electrolyte is obtained by gelating an electrolyte composition composed primarily of a compound having a reactive double bond on the molecule, an organic solvent and an ion-conductive salt.

**17.** The nonaqueous electrolyte secondary battery of any one of claims 1 to 16 which is **characterized by** having the following characteristics (A) and/or (B):

(A) a cell voltage of less than 5.5 V when overcharged at 25°C to a charge capacity which is 250% the cell capacity,
(B) a battery surface temperature of less than 90°C when overcharged at 25°C to a charge capacity which is 250% the cell capacity.

**18.** A power supply comprising a plurality of nonaqueous electrolyte secondary batteries according to any one of claims 1 to 17 which is **characterized in that** the batteries are arranged in series and/or in parallel.

**19.** A portable device **characterized by** being equipped with a nonaqueous electrolyte secondary battery according to any one of claims 1 to 17.

**20.** A mobile or transportation device **characterized by** being equipped with a nonaqueous electrolyte secondary battery according to any one of claims 1 to 17.

**21.** A household electrical appliance **characterized by** being equipped with a nonaqueous electrolyte secondary battery according to any one of claims 1 to 17.

**22.** A method of charging a nonaqueous electrolyte secondary battery comprising a positive electrode and a negative electrode which are composed of a lithium-occluding and releasing material and a binder polymer, at least one separator for separating the positive and negative electrodes, and a lithium salt-containing nonaqueous electrolyte;

the charging method being **characterized in that**, when charging is carried out by combining various charging patterns P, each specified by a current value X (in amperes, where $X \geq 0$ A) and a charging time t (in seconds, where $t \neq 0$ s), in the manner $P_1[X_1, t_1] \rightarrow P_2[X_2, t_2] \rightarrow P_3[X_3, t_3] \cdots \rightarrow P_n[X_n, t_n] \rightarrow P_{n+1}[X_{n+1}, t_{n+1}]$ (wherein n is an integer ≥ 1), the consecutive charging patterns P have mutually differing current values X.

**23.** The nonaqueous electrolyte secondary battery charging method of claim 22 which is **characterized in that** the current value $X_n$ for charging pattern $P_n[X_n, t_n]$ is at least 1C (1 hour rate) and the current value $X_{n+1}$ for charging pattern $P_{n+1}[X_{n+1}, t_{n+1}]$ (wherein n in each case is an integer ≥ 1) satisfies the condition $0 \leq X_{n+1} < X_n$.

**24.** The nonaqueous electrolyte secondary battery charging method of claim 22 or 23 which is **characterized in that** the current value $X_n$ for charging pattern $P_n[X_n, t_n]$ is at least 3C (0.33 hour rate) and the current value $X_{n+1}$ for charging pattern $P_{n+1}[X_{n+1}, t_{n+1}]$ (wherein n in each case is an integer ≥ 1) satisfies the condition $0 \leq X_{n+1} < X_n$.

**25.** The nonaqueous electrolyte secondary battery charging method of any one of claims 22 to 24 which is **characterized in that** the current value $X_n$ for charging pattern $P_n[X_n, t_n]$ is at least 3C (0.33 hour rate) and the current value $X_{n+1}$ for charging pattern $P_{n+1}[X_{n+1}, t_{n+1}]$ (wherein n in each case is an integer ≥ 1) is 0 A.

**26.** The nonaqueous electrolyte secondary battery charging method of claim 22 or 23 which is **characterized in that** the current value $X_n$ for charging pattern $P_n[X_n, t_n]$ is at least 1C (1 hour rate) and the nonaqueous electrolyte secondary battery when charged at said current value $X_n$ attains a voltage of at least 3.0 V, and **in that** the current value $X_{n+1}$ for charging pattern $P_{n+1}[X_{n+1}, t_{n+1}]$ (wherein n in each case is an integer ≥ 1) is 0 A.

**27.** The nonaqueous electrolyte secondary battery charging method of claim 26 which is **characterized in that** the

nonaqueous electrolyte secondary battery attains a voltage of at least 4.2 V.

**28.** The nonaqueous electrolyte secondary battery charging method of any one of claims 22 to 27 which is **characterized in that** the charging time $t_n$ for charging pattern $P_n[X_n, t_n]$ (wherein n is an integer ≥ 1) is at most 1 second.

**29.** A nonaqueous electrolyte secondary battery charging method which is **characterized by** carrying out the charging method of any one of claims 22 to 28 in combination with dc constant-current charging and/or constant-voltage charging.

**30.** A nonaqueous electrolyte secondary battery charging method which is **characterized by** carrying out the charging method of any one of claims 22 to 28, then carrying out dc constant-current charging and/or constant-voltage charging.

**31.** A nonaqueous electrolyte secondary battery charging method which is **characterized by** using a charging method of any one of claims 22 to 30 to carry out charging at preset charge cycle intervals during charge/discharge cycling of the nonaqueous electrolyte secondary battery.

**32.** The nonaqueous electrolyte secondary battery charging method of any one of claims 22 to 31 which is **characterized by** the use of a nonaqueous electrolyte secondary battery comprising a positive electrode and a negative electrode which are composed of a lithium ion-occluding and releasing material and a binder polymer, at least one separator for separating the positive and negative electrodes, and a nonaqueous electrolyte which is composed of a lithium salt and an organic solvent;

wherein the electrolyte includes also a substance that undergoes oxidation at the positive electrode in a cell voltage range of 4.1 V to 5.2 V, which substance provokes at the positive electrode an oxidation reaction that differs from the lithium-releasing reaction.

**33.** The nonaqueous electrolyte secondary battery charging method of any one of claims 22 to 31 which is **characterized by** the use of a nonaqueous electrolyte secondary battery comprising a positive electrode and a negative electrode which are composed of a lithium ion-occluding and releasing material and a binder polymer, at least one separator for separating the positive and negative electrodes, and a nonaqueous electrolyte which is composed of a lithium salt and an organic solvent;

wherein the electrolyte includes also a substance that undergoes electrode oxidation at the positive electrode in a cell voltage range of 4.1 V to 5.2 V, which substance provokes at the positive electrode an oxidation reaction that differs from the lithium-releasing reaction and enables a reduction reaction that differs from the lithium-occluding reaction to occur at the negative electrode.

**34.** The nonaqueous electrolyte secondary battery charging method of claim 32 or 33 which is **characterized in that** said electrode oxidation generates oxygen and/or carbon dioxide, and the oxygen and/or carbon dioxide oxidize a small amount of lithium metal which forms at the negative electrode to $Li_2O$ and/or $Li_2CO_3$.

**35.** The nonaqueous electrolyte secondary battery charging method of claim 34 which is **characterized in that** the $Li_2O$ and/or $Li_2CO_3$ are reduced to metallic lithium and/or lithium ions at the negative electrode.

**36.** The nonaqueous electrolyte secondary battery charging method of any one of claims 32 to 35 which is **characterized by**, when charging is carried out at 25°C and a current of up to 10.00C based on the theoretical capacity of the positive electrode, being free of positive electrode and negative electrode deterioration up to a charge capacity L defined as follows:

$$\text{charge capacity L (\%)} = 5 \times (\text{charging current C})^{-0.5} \times 100.$$

**37.** The nonaqueous electrolyte secondary battery charging method of any one of claims 32 to 36 which is **characterized in that** electrode oxidation occurs in a voltage range of 1.40 to 1.60 V with respect to an $AlO_x$ reference electrode.

**38.** The nonaqueous electrolyte secondary battery charging method of any one of claims 32 to 37 which is **characterized in that** the organic solvent is one or more selected from among ethylene carbonate, propylene carbonate, vinylene carbonate and diethyl carbonate;

wherein electrode oxidation occurs in a voltage range of 1.05 to 1.61 V with respect to the standard hydrogen electrode (SHE) in the organic solvent and under normal temperature and standard atmospheric pressure conditions of 298.15 K and 101.325 Pa.

**39.** The nonaqueous electrolyte secondary battery charging method of any one of claims 32 to 38 which is **characterized in that** the substance which is oxidized at the positive electrode is one or more selected from among compounds of the general formulas

R-CO-R, R-CO-OR, R-CO-NR'R, RO-CO-X-CO-OR and RR'N-CO-NR'R;

wherein each R is independently a substituted or unsubstituted monovalent hydrocarbon group, each R' is independently a hydrogen atom or a substituted or unsubstituted monovalent hydrocarbon group, and X is a divalent organic group.

**40.** The nonaqueous electrolyte secondary battery charging method of any one of claims 32 to 29 which is **characterized in that** the separator has a porosity of at least 40%.

**41.** The nonaqueous electrolyte secondary battery charging method of claim 40 which is **characterized in that** the separator is composed of at least one selected from among cellulose, polypropylene, polyethylene and polyester, and has a porosity of at least 60%.

# FIG.1

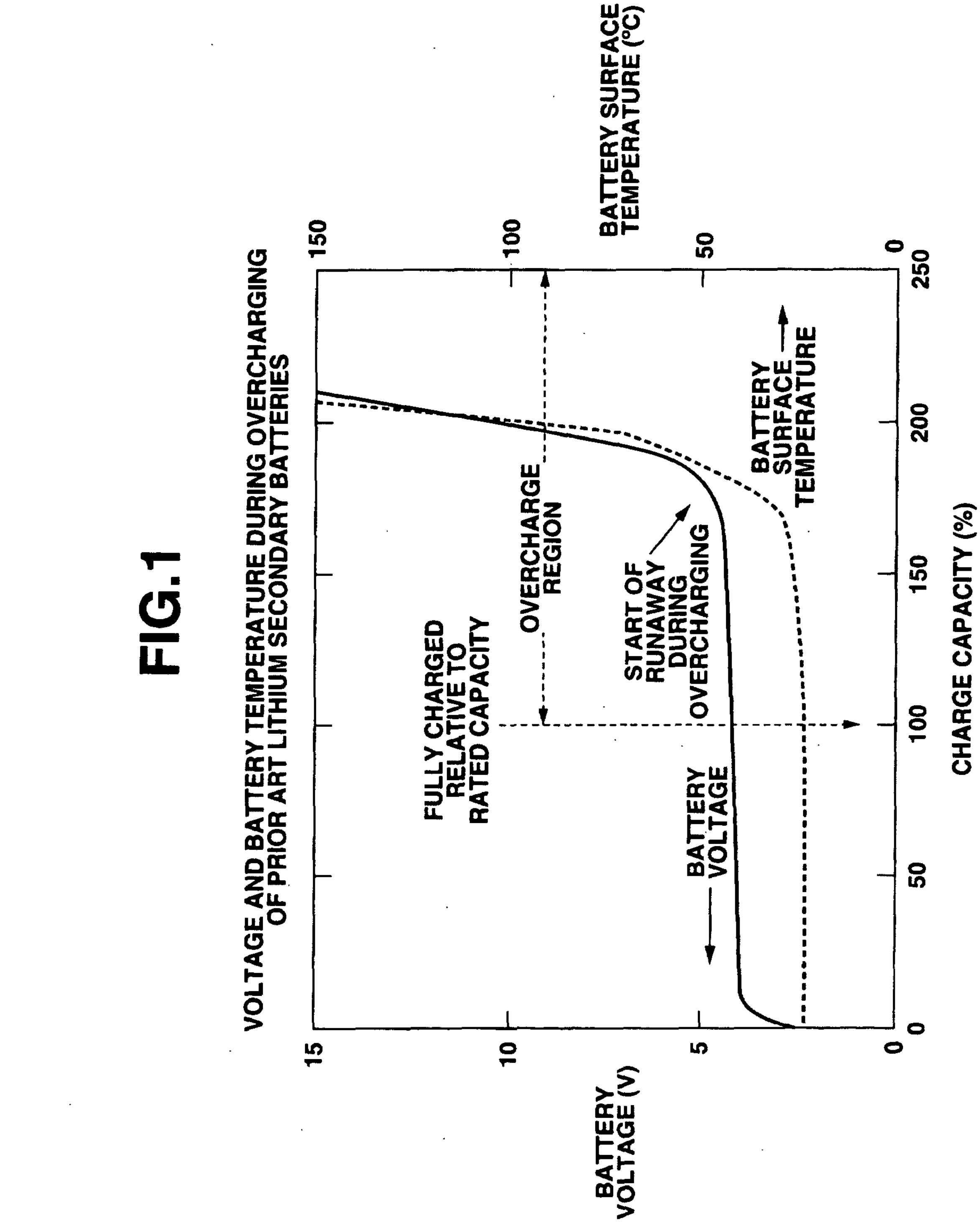
VOLTAGE AND BATTERY TEMPERATURE DURING OVERCHARGING OF PRIOR ART LITHIUM SECONDARY BATTERIES
BATTERY VOLTAGE (V)
BATTERY SURFACE TEMPERATURE (°C)
CHARGE CAPACITY (%)
0
5
10
15
50
100
150
0
50
100
150
200
250
FULLY CHARGED RELATIVE TO RATED CAPACITY
OVERCHARGE REGION
START OF RUNAWAY DURING OVERCHARGING
BATTERY VOLTAGE
BATTERY SURFACE TEMPERATURE
BATTERY SURFACE TEMPERATURE

FIG.2

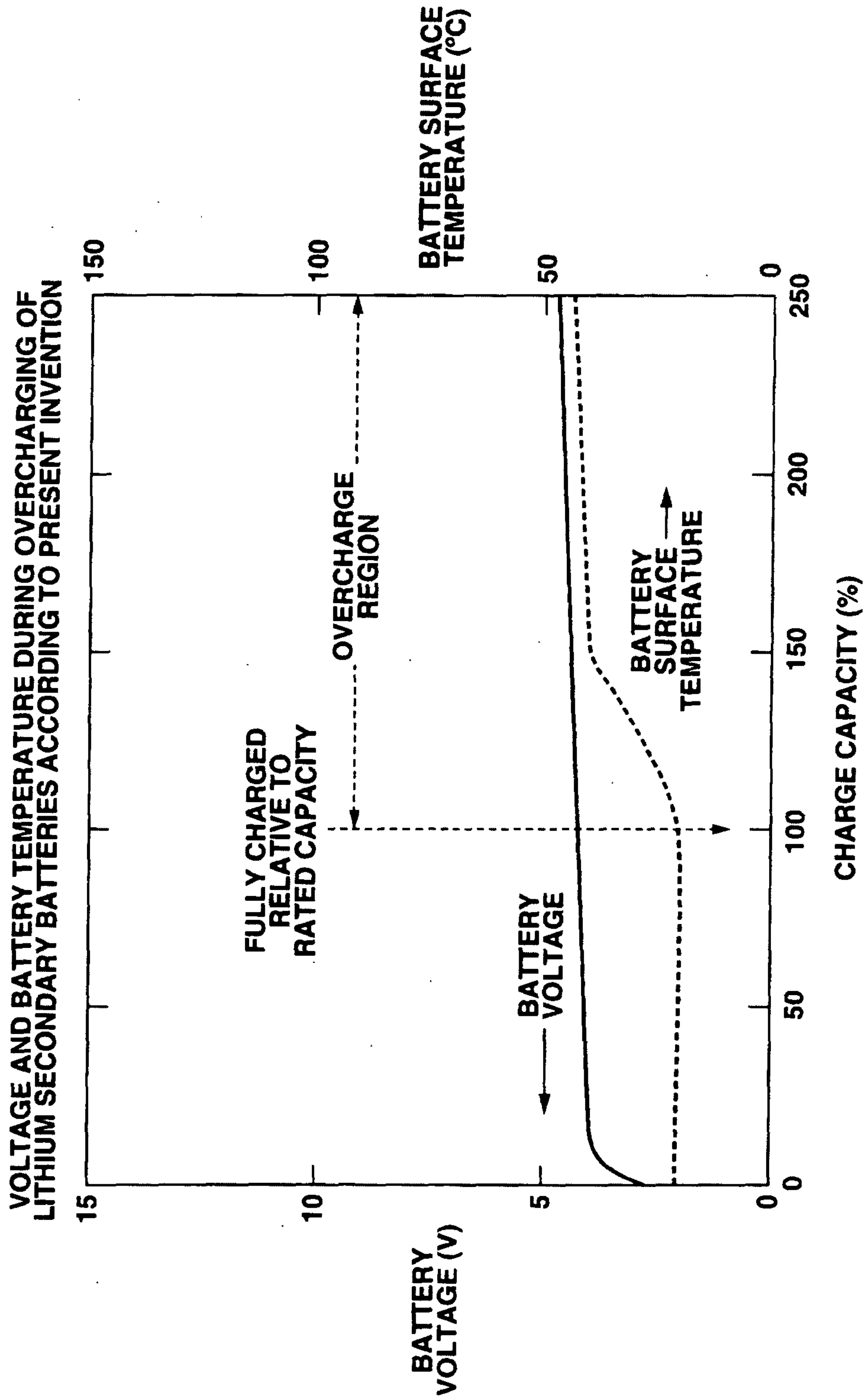
VOLTAGE AND BATTERY TEMPERATURE DURING OVERCHARGING OF LITHIUM SECONDARY BATTERIES ACCORDING TO PRESENT INVENTION
BATTERY VOLTAGE (V)
15
10
5
0
BATTERY SURFACE TEMPERATURE (°C)
150
100
50
0
0
50
100
150
200
250
CHARGE CAPACITY (%)
FULLY CHARGED RELATIVE TO RATED CAPACITY
OVERCHARGE REGION
BATTERY VOLTAGE
BATTERY SURFACE TEMPERATURE

FIG.3

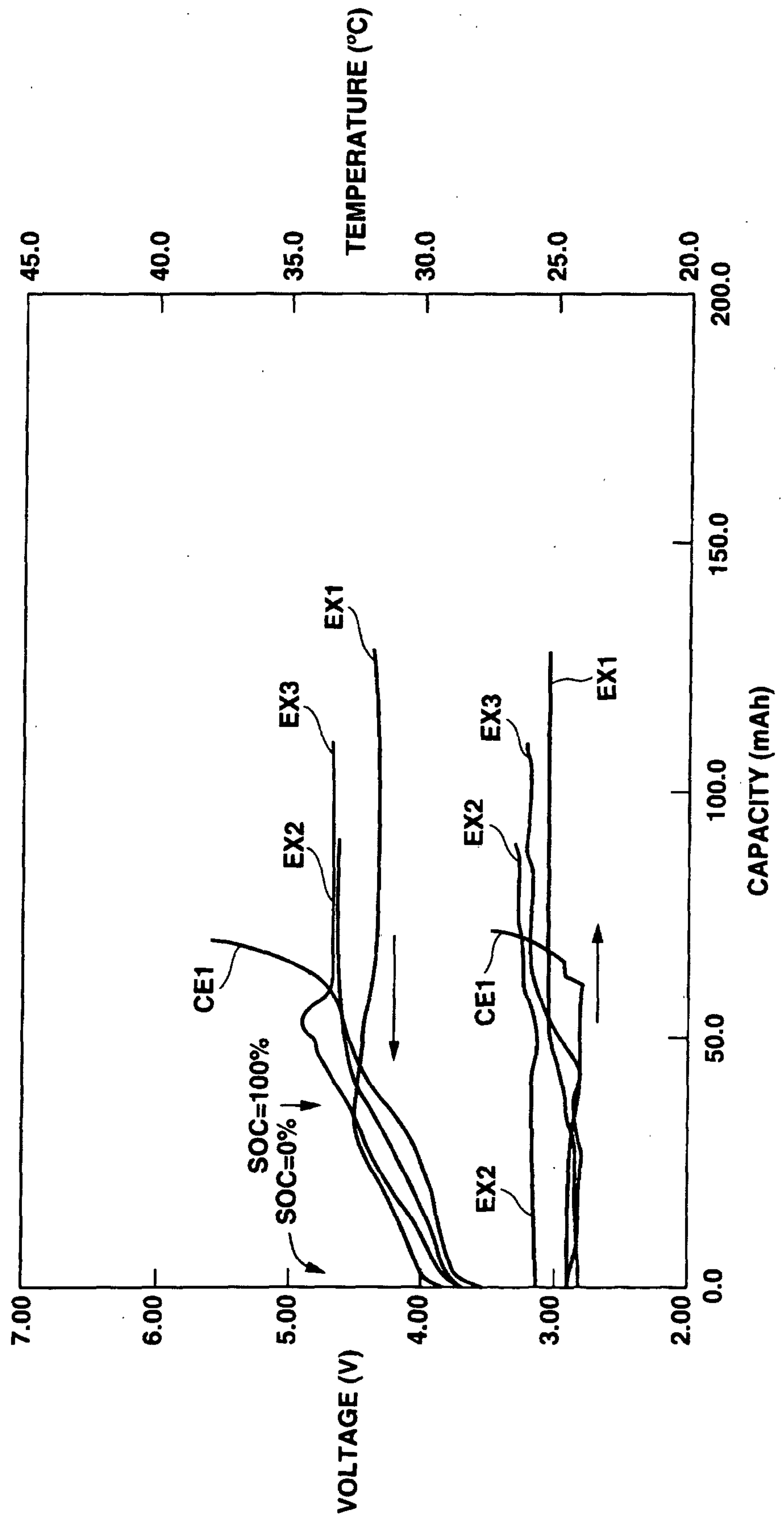


VOLTAGE AND BATTERY SURFACE TEMPERATURE DURING OVERCHARGING OF SECONDARY BATTERIES FROM EXAMPLES 1 TO 3 ACCORDING TO THE INVENTION AND COMPARATIVE EXAMPLE 1

FIG.4

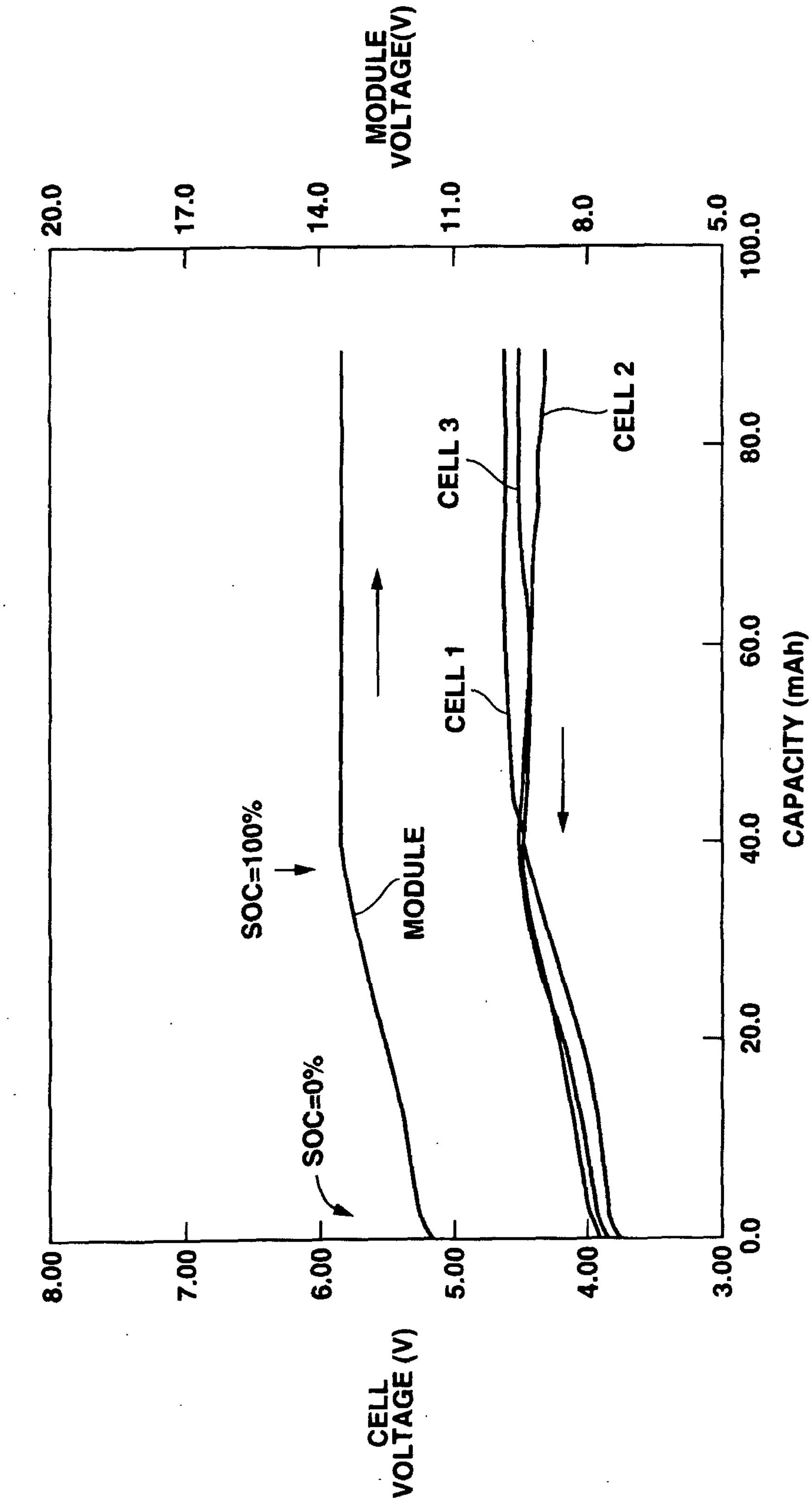


CHANGE IN VOLTAGE DURING CONTINUOUS CHARGING OF BATTERY MODULE AND SINGLE CELLS IN EXAMPLE 4

FIG.5

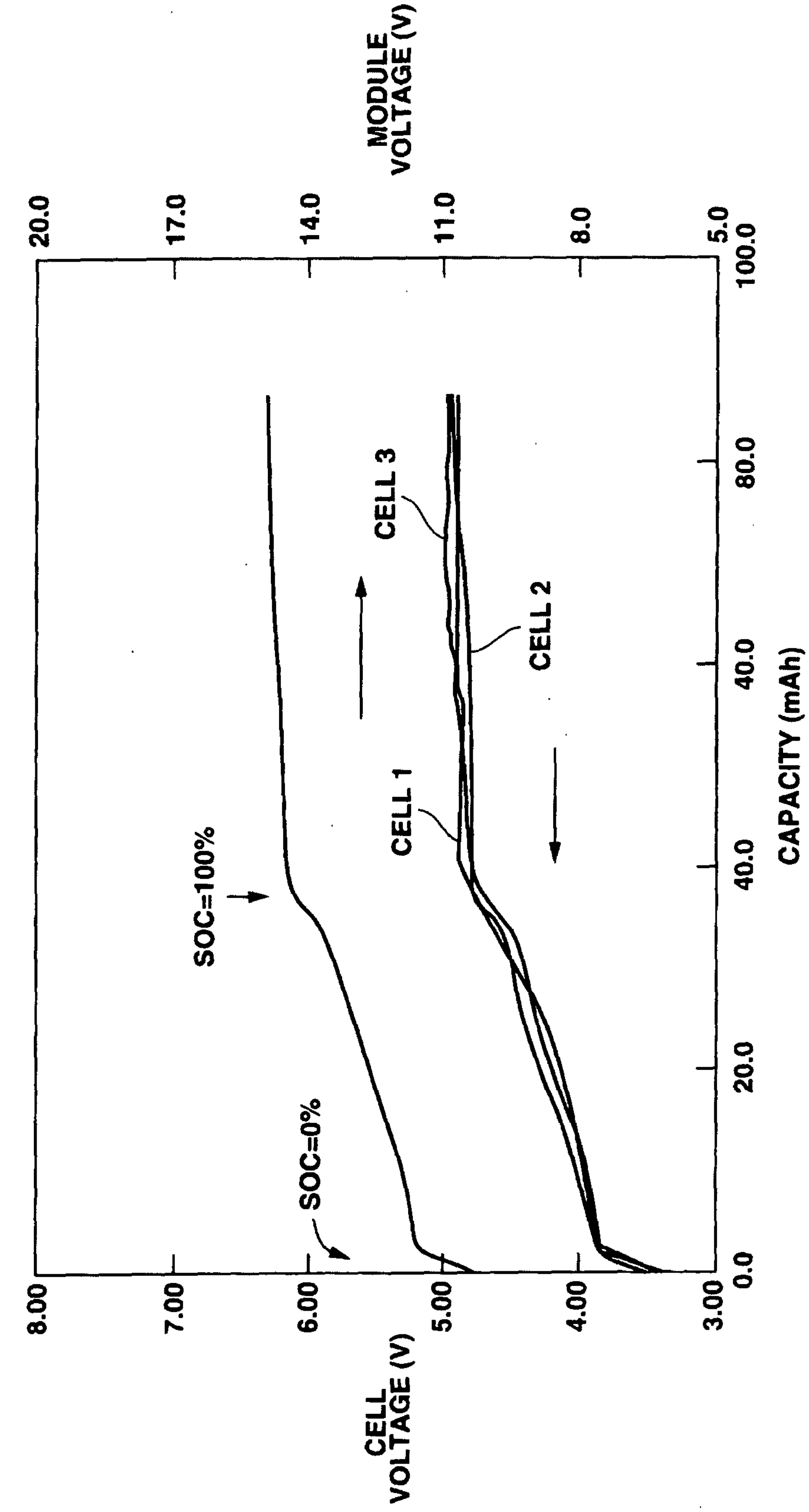
MODULE VOLTAGE (V)
20.0
17.0
14.0
11.0
8.0
5.0
CELL VOLTAGE (V)
8.00
7.00
6.00
5.00
4.00
3.00
CAPACITY (mAh)
0.0
20.0
40.0
40.0
80.0
100.0
SOC=0%
SOC=100%
CELL 1
CELL 2
CELL 3

FIG.6

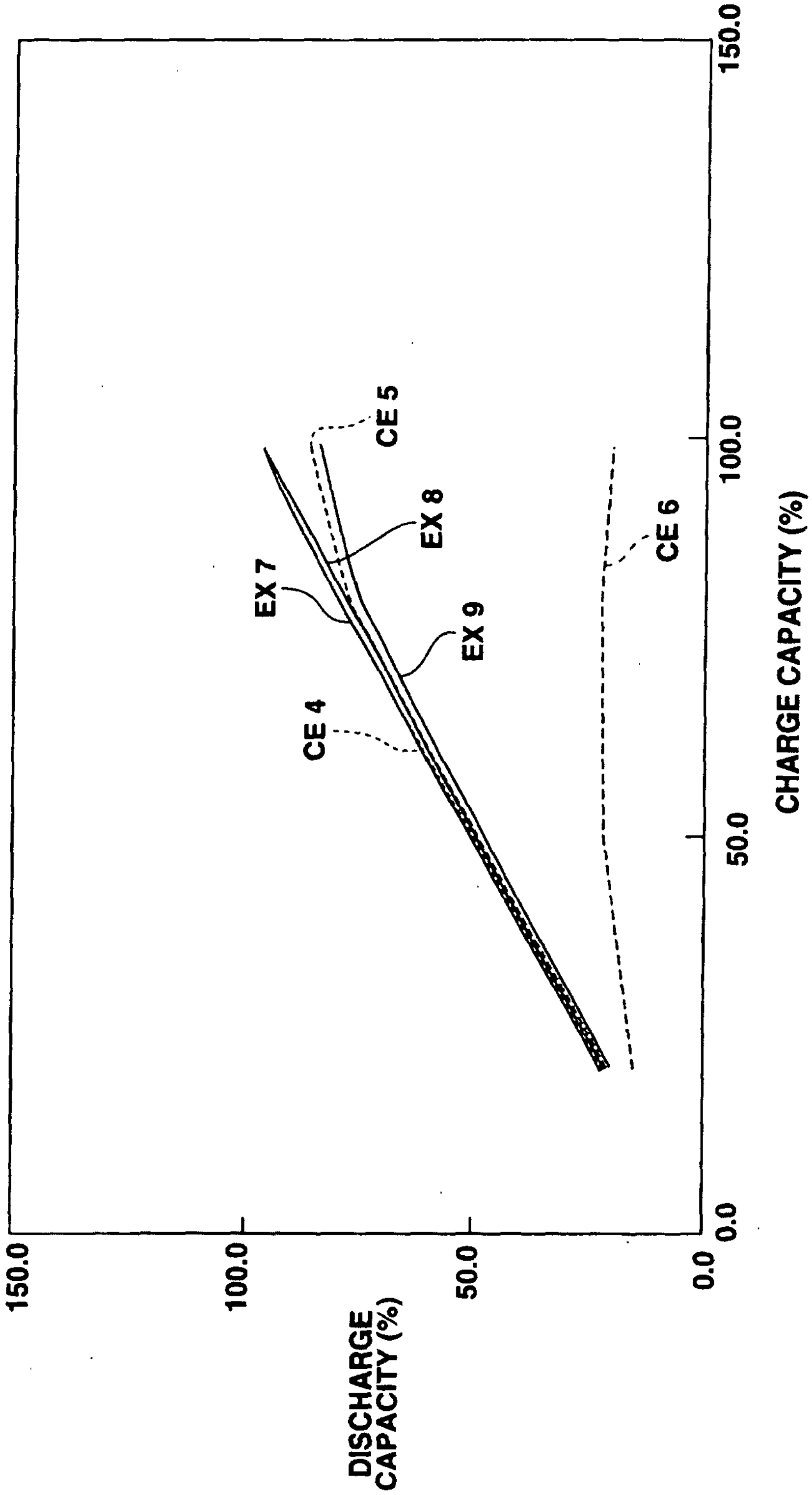

DISCHARGE CAPACITY (%)
150.0
100.0
50.0
0.0
0.0
50.0
100.0
150.0
CHARGE CAPACITY (%)
CE 4
EX 7
EX 8
EX 9
CE 5
CE 6

FIG.7

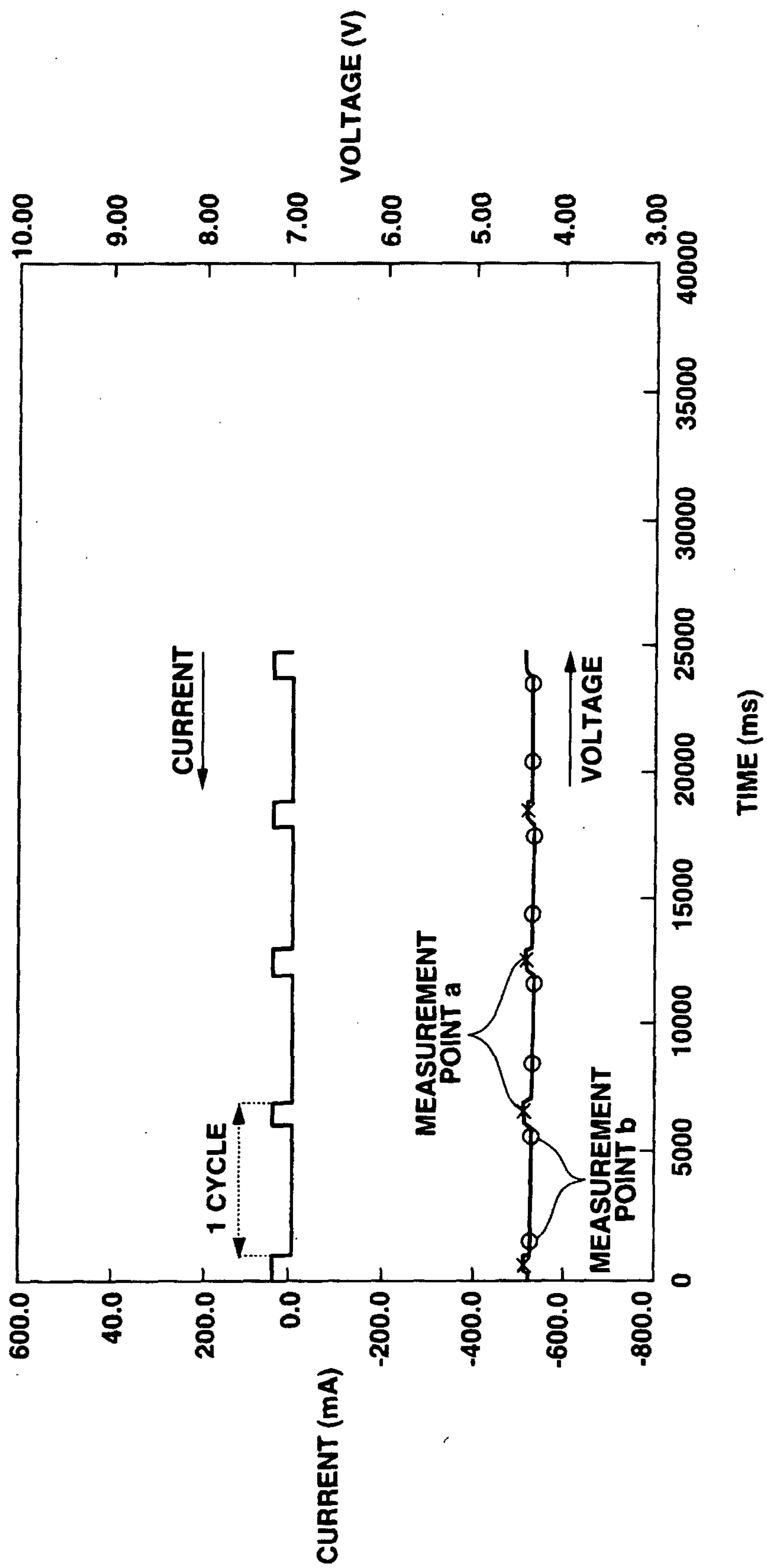
VOLTAGE (V)
10.00
9.00
8.00
7.00
6.00
5.00
4.00
3.00
CURRENT (mA)
600.0
40.0
200.0
0.0
-200.0
-400.0
-600.0
-800.0
TIME (ms)
0
5000
10000
15000
20000
25000
30000
35000
40000
CURRENT
VOLTAGE
1 CYCLE
MEASUREMENT POINT a
MEASUREMENT POINT b

FIG.8

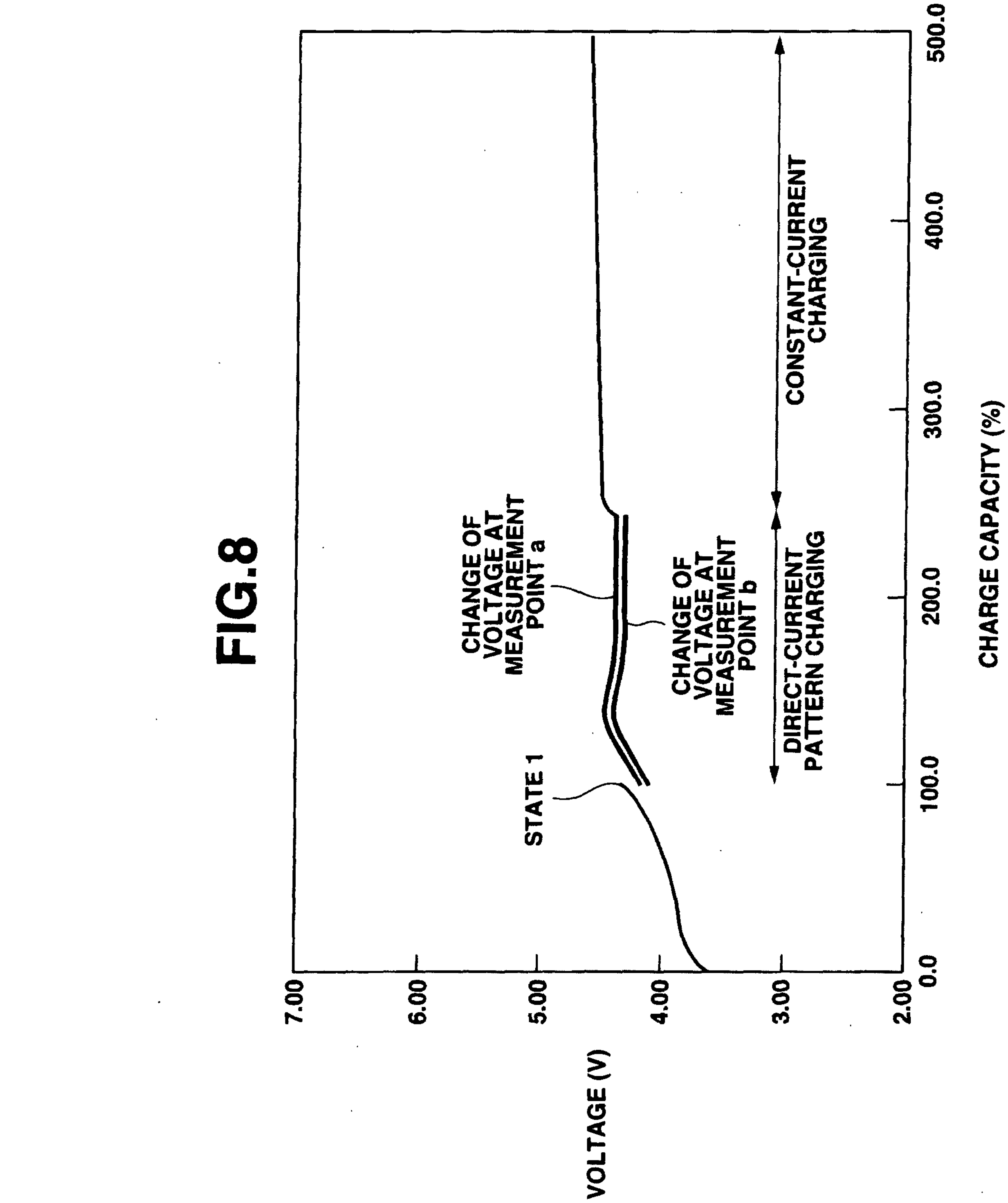
VOLTAGE (V)
7.00
6.00
5.00
4.00
3.00
2.00
0.0
100.0
200.0
300.0
400.0
500.0
CHARGE CAPACITY (%)
STATE 1
CHANGE OF VOLTAGE AT MEASUREMENT POINT a
CHANGE OF VOLTAGE AT MEASUREMENT POINT b
DIRECT-CURRENT PATTERN CHARGING
CONSTANT-CURRENT CHARGING

FIG.9

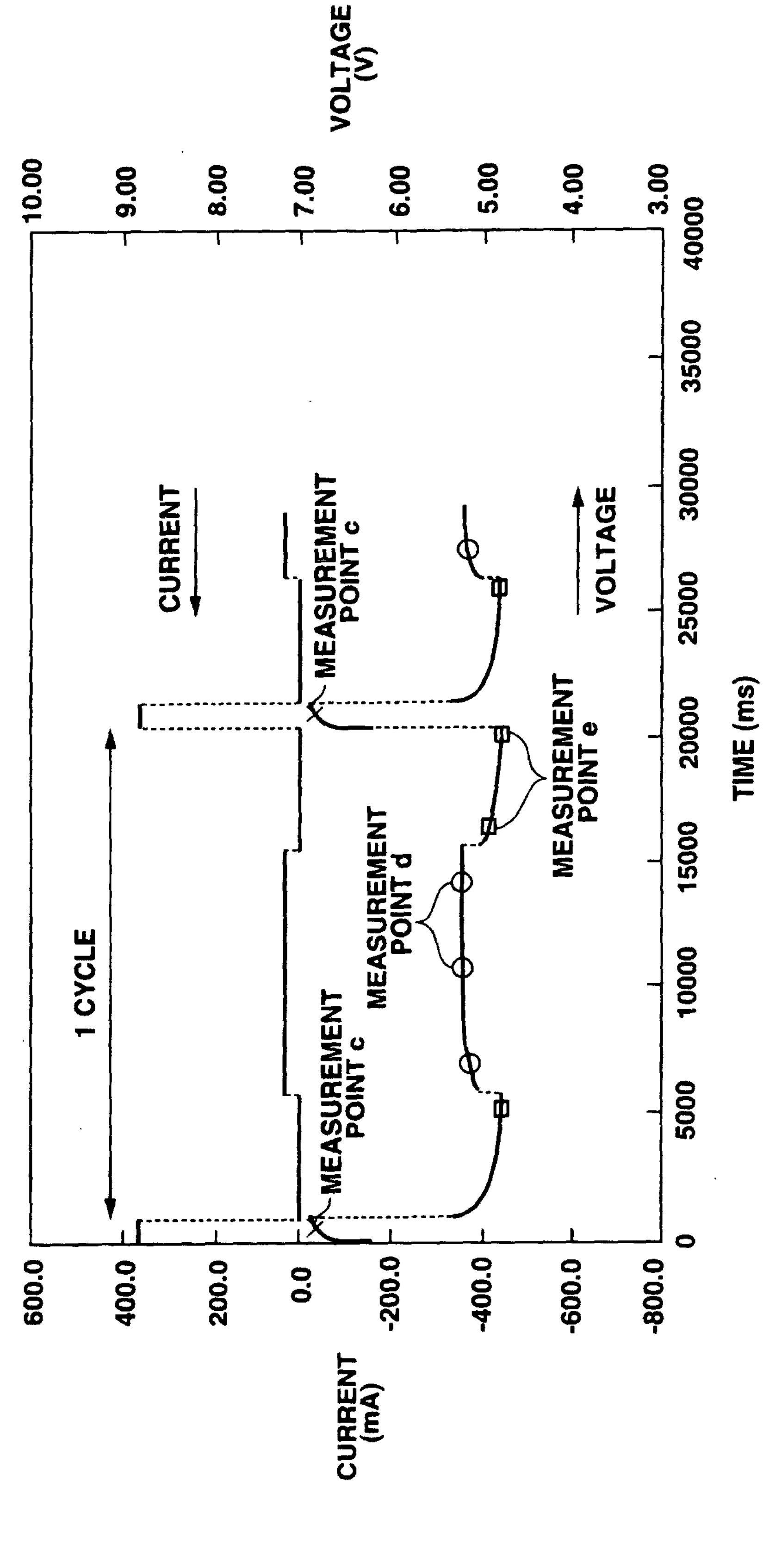
VOLTAGE (V)
10.00
9.00
8.00
7.00
6.00
5.00
4.00
3.00
CURRENT (mA)
600.0
400.0
200.0
0.0
-200.0
-400.0
-600.0
-800.0
0
5000
10000
15000
20000
25000
30000
35000
40000
TIME (ms)
1 CYCLE
CURRENT
VOLTAGE
MEASUREMENT POINT c
MEASUREMENT POINT c
MEASUREMENT POINT d
MEASUREMENT POINT e

FIG.10

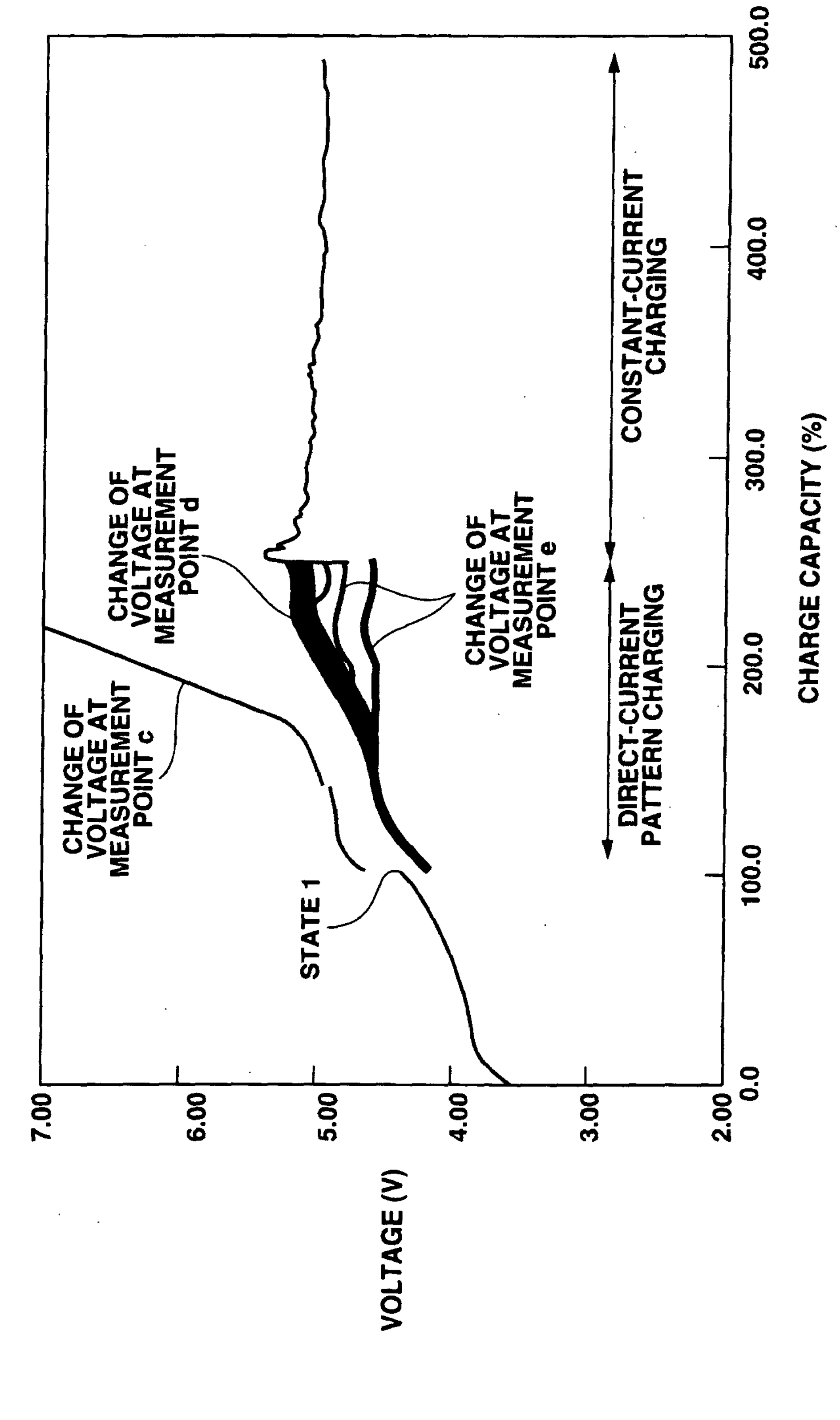
VOLTAGE (V)
7.00
6.00
5.00
4.00
3.00
2.00
0.0
100.0
200.0
300.0
400.0
500.0
CHARGE CAPACITY (%)
CHANGE OF VOLTAGE AT MEASUREMENT POINT c
STATE 1
CHANGE OF VOLTAGE AT MEASUREMENT POINT d
CHANGE OF VOLTAGE AT MEASUREMENT POINT e
DIRECT-CURRENT PATTERN CHARGING
CONSTANT-CURRENT CHARGING

FIG.11

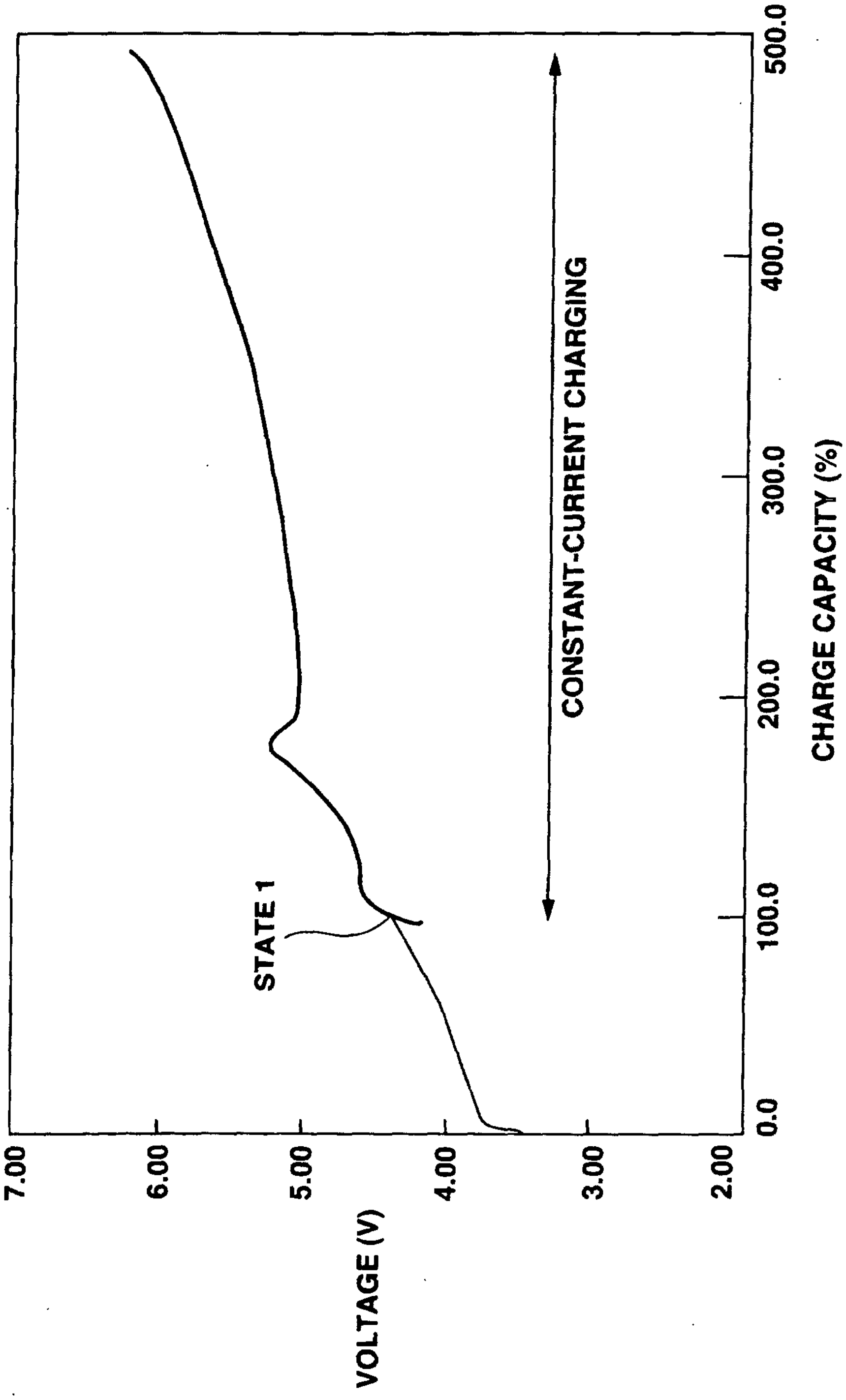
VOLTAGE (V)
7.00
6.00
5.00
4.00
3.00
2.00
STATE 1
CONSTANT-CURRENT CHARGING
0.0
100.0
200.0
300.0
400.0
500.0
CHARGE CAPACITY (%)

FIG.12

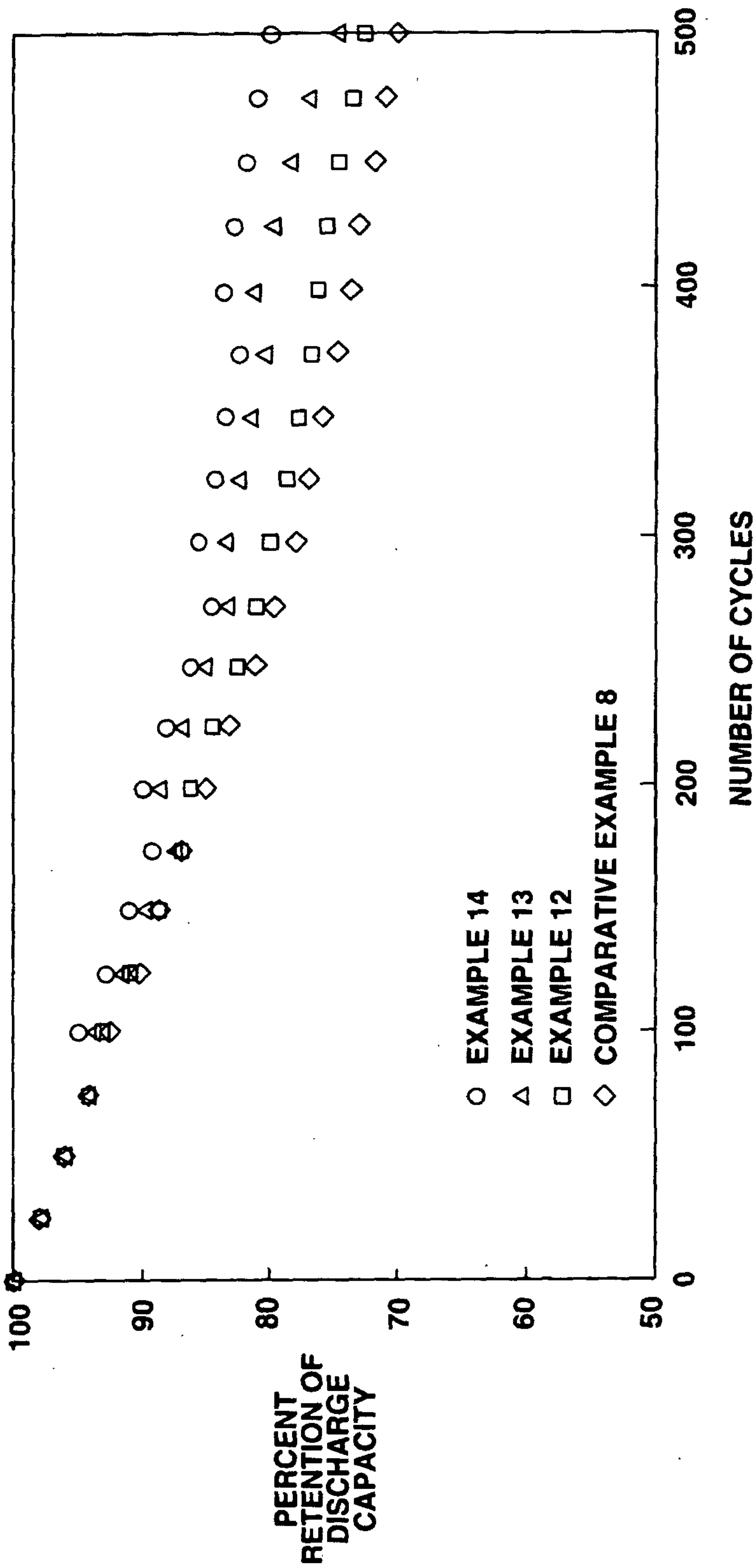
PERCENT RETENTION OF DISCHARGE CAPACITY
100
90
80
70
60
50
0
100
200
300
400
500
NUMBER OF CYCLES
○ EXAMPLE 14
△ EXAMPLE 13
□ EXAMPLE 12
◇ COMPARATIVE EXAMPLE 8

FIG.13

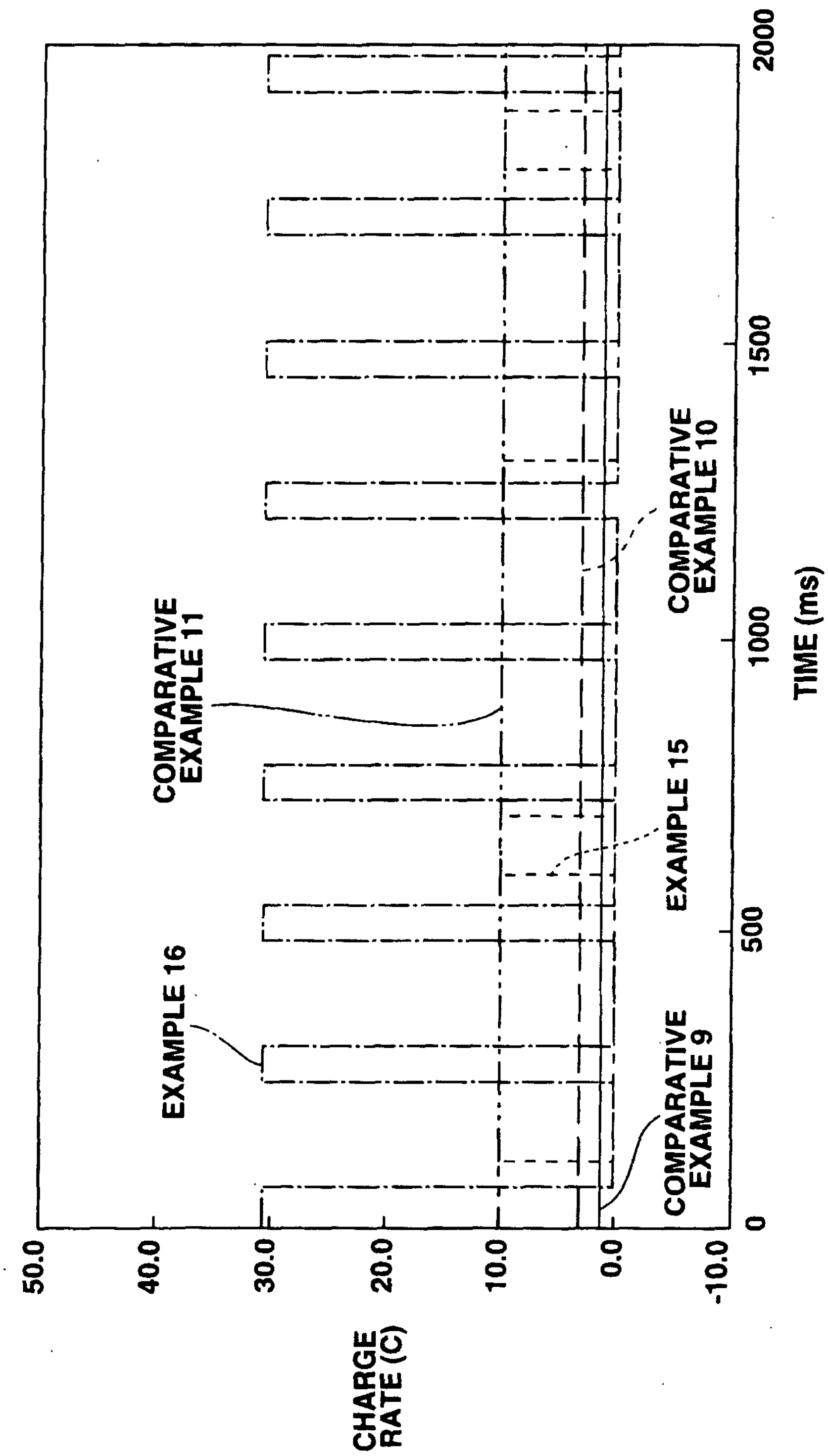

CHARGE RATE (C)
50.0
40.0
30.0
20.0
10.0
0.0
-10.0
0
500
1000
1500
2000
TIME (ms)
EXAMPLE 16
COMPARATIVE EXAMPLE 9
EXAMPLE 15
COMPARATIVE EXAMPLE 11
COMPARATIVE EXAMPLE 10

# FIG.14

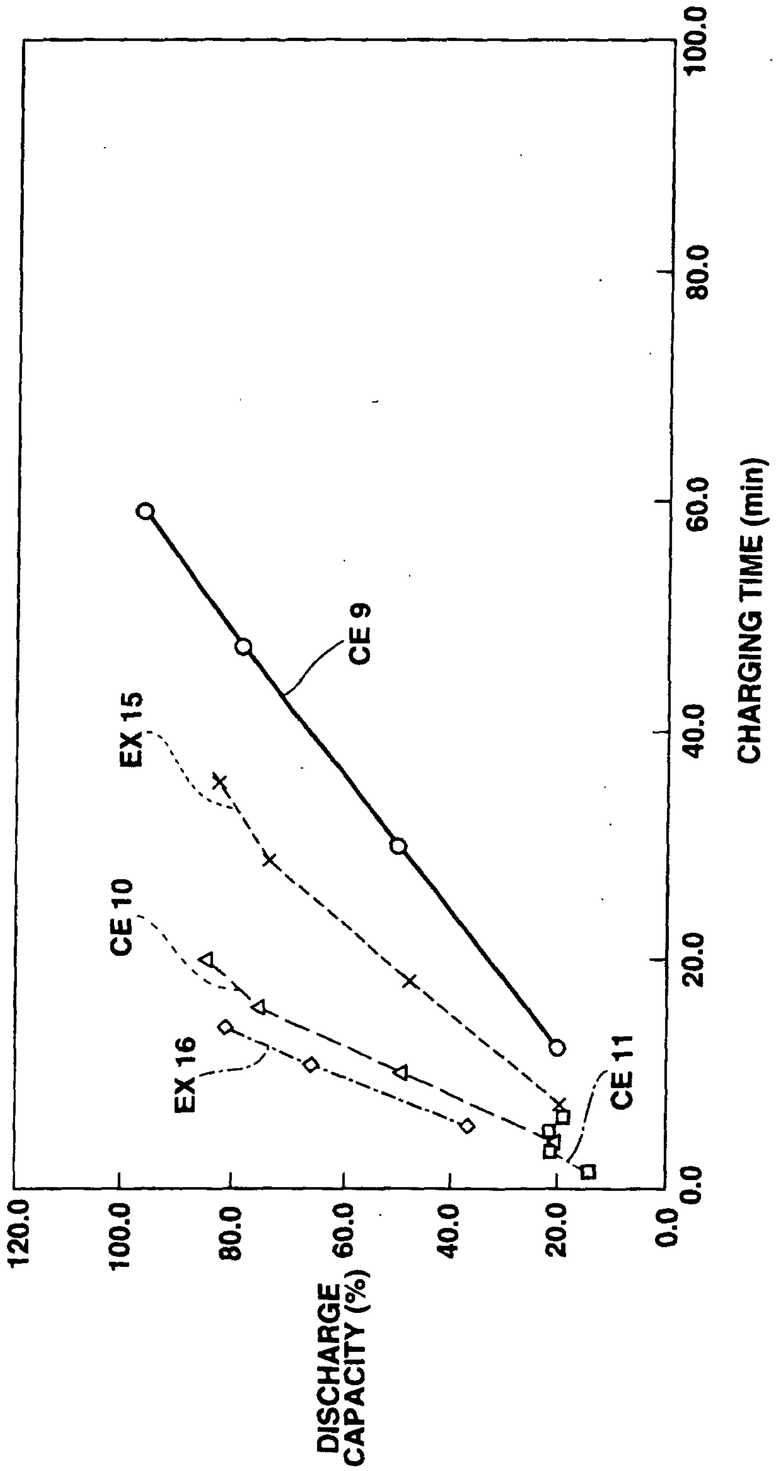
DISCHARGE CAPACITY (%)
120.0
100.0
80.0
60.0
40.0
20.0
0.0
20.0
40.0
60.0
80.0
100.0
CHARGING TIME (min)
CE 9
EX 15
CE 10
EX 16
CE 11

**INTERNATIONAL SEARCH REPORT**

International application No. PCT/JP02/09972

A. CLASSIFICATION OF SUBJECT MATTER
Int.Cl[7] H01M10/40, 2/16, 10/44

According to International Patent Classification (IPC) or to both national classification and IPC

B. FIELDS SEARCHED

Minimum documentation searched (classification system followed by classification symbols)
Int.Cl[7] H01M10/40, 2/16, 10/44

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-85055 A (Sony Corp.), 30 March, 2001 (30.03.01), Claims 1, 2; Par. Nos. [0001], [0009] (Family: none) | 1 |
| X | JP 2001-210364 A (Mitsubishi Chemical Corp.), 03 August, 2001 (03.08.01), Claims 1 to 10; Par. No. [0029] (Family: none) | 1 |
| X | JP 2001-110443 A (Matsushita Electric Industrial Co., Ltd.), 20 April, 2001 (20.04.01), Claims 1 to 6 (Family: none) | 1 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 December, 2002 (27.12.02) | 28 January, 2003 (28.01.03) |
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP02/09972

C (Continuation). DOCUMENTS CONSIDERED TO BE RELEVANT

| Category* | Citation of document, with indication, where appropriate, of the relevant passages | Relevant to claim No. |
|---|---|---|
| X | JP 2000-277147 A (Sony Corp.), 06 October, 2000 (06.10.00), Claims 1, 2; Par. No. [0050]; Fig. 2 (Family: none) | 1 |
| X | JP 2000-251932 A (Sony Corp.), 14 September, 2000 (14.09.00), Claims 1 to 3; Par. No. [0010] (Family: none) | 1 |
| X | JP 9-50822 A (Sony Corp.), 18 February, 1997 (18.02.97), Claims 1 to 5; examples (Family: none) | 1 |
| X | JP 9-17447 A (Sony Corp.), 17 January, 1997 (17.01.97), Claims 1, 2; Par. Nos. [0009] to [0024]; examples (Family: none) | 1 |
| X | JP 7-302614 A (Sony Corp.), 14 November, 1995 (14.11.95), Claims 1 to 4; Par. No. [0008]; examples (Family: none) | 1 |
| E,X | JP 2002-298910 A (Ube Industries, Ltd.), 11 October, 2002 (11.10.02), Claims 1 to 4; Par. No. [0015] (Family: none) | 1 |
| P,X | JP 2002-222663 A (Mitsubishi Chemical Corp.), 09 August, 2002 (09.08.02), Claims 1 to 8 (Family: none) | 1 |
| P,X | JP 2002-203595 A (Toyota Motor Corp.), 19 July, 2002 (19.07.02), Claims 1 to 6 (Family: none) | 1 |
| P,X | JP 2001-357876 A (Nippon Steel Chemical Co., Ltd.), 26 December, 2001 (26.12.01), Claims 1, 2 (Family: none) | 1 |
| P,X | JP 2001-332297 A (Ube Industries, Ltd.), 30 November, 2001 (30.11.01), Claims 1, 2; Par. No. [0018] (Family: none) | 1 |
| X | JP 2001-217005 A (Bridgestone Corp.), 10 August, 2001 (10.08.01), Claims 1 to 12 (Family: none) | 1 |

Form PCT/ISA/210 (continuation of second sheet) (July 1998)

**INTERNATIONAL SEARCH REPORT**

International application No.
PCT/JP02/09972

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-217002 A (Bridgestone Corp.), 10 August, 2001 (10.08.01), Claims 1 to 6 (Family: none) | 1 |
| X | JP 9-199170 A (Yuasa Corp.), 31 July, 1997 (31.07.97), Claims 1, 2; Par. No. [0008] (Family: none) | 1 |
| X | JP 7-176322 A (Mitsubishi Cable Industries, Ltd.), 14 July, 1995 (14.07.95), Claim 1; examples; effect of the invention (Family: none) | 1 |
| X | JP 11-185809 A (FDK Corp.), 09 July, 1999 (09.07.99), Claim 1 (Family: none) | 1 |
| X | JP 2000-195551 A (Japan Storage Battery Co., Ltd.), 14 July, 2000 (14.07.00), Claims 1 to 3 (Family: none) | 1 |

Form PCT/ISA/210 (continuation of second sheet) (July 1998)

## INTERNATIONAL SEARCH REPORT

International application No.
PCT/JP02/09972

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:
(See extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1

**Remark on Protest** ☐ The additional search fees were accompanied by the applicant's protest.
☐ No protest accompanied the payment of additional search fees.

Form PCT/ISA/210 (continuation of first sheet (1)) (July 1998)

**INTERNATIONAL SEARCH REPORT**

International application No.
PCT/JP02/09972

Continuation of Box No.II of continuation of first sheet(1)

There must be a special technical feature so linking a group of inventions of claims as to form a single general inventive concept in order that the group of inventions may satisfy the requirement of unity of invention. However, the technical feature common to claims 1, 2, 14, 22 in the independent form is mere a nonaqueous secondary cell. Therefore, there is no special technical feature so linking the inventions of claims 1-41 as to form a single general inventive concept, and consequently the claims do not comply with the requirement of unity of invention (there is a technical feature common to claims 1, 2, and this will be also examined later).

The inventions are divided into a group of inventions of claim 1, 2, a group of inventions of claims including claim 14, and a group of inventions of claims including claim 22. For each group, whether or not any "special technical feature" is involved will be examined. As disclosed in documents 1-8, the technical feature that the electrolyte of a nonaqueous secondary cell contains a material oxidized at the positive plate at a cell voltage of a potential of 4.1V to 5.2V, and the material is subjected at the positive plate to oxidation different from the lithium releasing reaction cannot be a special technical feature. Further the technical feature that a cellulose separator is used as the separator of a nonaqueous electrolyte secondary cell having a gel electrolyte is disclosed in documents 9-15. Therefore the technical feature cannot be a special technical feature.

Considering the above examination and counting the inventions so that the number of inventions may be minimum, the inventions of the claims of the application is at least 20 as listed below.

1. The invention of claim 1 (Publicly known)
2. The invention of claim 2 (This invention involves all the technical matters of the invention of claim 1. Therefore, the inventions of claims 1, 2 are not linked by a special technical feature, since the invention of claim 1 is publicly known.)
3. The inventions of claims 3, 4
4. The invention of claim 5
5. The invention of claim 6
6. The invention of claim 7
7. The invention of claim 8
8. The invention of claim 9
9. The invention of claim 10
10. The inventions of claims 11, 12
11. The invention of claim 13
12. The invention of claim 14 (Publicly known)
13. The invention of claim 15
14. The invention of claim 16
15. The invention of claim 17
16. The invention of claim 18
17. The invention of claim 19
18. The invention of claim 20
19. The invention of claim 21
20. The inventions of claims 22, and 23-41

Form PCT/ISA/210 (extra sheet) (July 1998)

**INTERNATIONAL SEARCH REPORT**

International application No.
PCT/JP02/09972

[Document table]

1. JP 2001-85055 A (Sony Corp.), 30 March, 2001 (30.03.01)
2. JP 2001-210364 A (Mitsubishi Chemical Corp.), 03 August, 2001 (03.08.01)
3. JP 2001-110443 A (Matsushita Electric Industrial Co., Ltd.), 20 April, 2001 (20.04.01)
4. JP 2000-277147 A (Sony Corp.), 06 October, 2000 (06.10.00)
5. JP 2000-251932 A (Sony Corp.), 14 September, 2000 (14.09.00)
6. JP 9-50822 A (Sony Corp.), 18 February, 1997 (18.02.97)
7. JP 9-17447 A (Sony Corp.), 17 January, 1997 (17.01.97)
8. JP 7-302614 A (Sony Corp.), 14 November, 1995 (14.11.95)
9. JP 2000-215916 A (Hitachi Maxell, Ltd.), 04 August, 2000 (04.08.00)
10. JP 11-242951 A (TDK Corp.), 07 September, 1999 (07.09.99)
11. JP 11-185815 A (Fujitsu Ltd.), 09 July, 1999 (09.07.99)
12. JP 2001-250584 A (Toshiba Corp.), 14 September, 2001 (14.09.01)
13. JP 2001-229908 A (Mitsubishi Chemical Corp.), 24 August, 2001 (24.08.01)
14. JP 2000-315481 A (Toshiba Corp.), 14 November, 2000 (14.11.00)
15. JP 2000-251944 A (Toshiba Corp.), 14 September, 2000 (14.09.00)

Form PCT/ISA/210 (extra sheet) (July 1998)